# EUROPEAN PATENT APPLICATION

(11) **EP 4 576 869 A1**
(43) Date of publication of application: **25.06.2025**
(21) Application number: 23864603.8
(22) Date of filing: 05.09.2023
(51) Int. Cl.: H04W 28/02

(54) **DATA TRANSMISSION METHOD IN COMMUNICATION SYSTEM, AND COMMUNICATION APPARATUS**

(30) Priority: 14.09.2022 CN 202211116608
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN); HUANG, Zhenglei, Shenzhen, Guangdong 518129 (CN)
(74) Representative: Isarpatent
(86) International application number: PCT/CN2023/116968
(87) International publication number: WO 2024/055871

(57) **Abstract**

This application provides a data transmission method in a communication system and a communication apparatus. The method includes: An access network device receives a PDU set of a service used on a terminal, where the PDU set includes a first PDU set and a second PDU set, and a service to which the first PDU set belongs is the same as a service to which the second PDU set belongs; and the access network device sends the first PDU set to the terminal within first duration, and sends the second PDU set to the terminal within second duration, where the first duration is different from the second duration. According to the foregoing method, the access network device may use different transmission duration for different PDU sets. This helps ensure transmission of the PDU sets, and further helps improve service experience of a user.

## Description

This application claims priority to Chinese Patent Application No. 202211116608.1, filed on September 14, 2022, and entitled "DATA TRANSMISSION METHOD IN COMMUNICATION SYSTEM AND COMMUNICATION APPARATUS", which is incorporated herein by reference in its entirety.

### TECHNICAL FIELD

Embodiments of this application relate to the communication field, and more specifically, to a data transmission method in a communication system and a communication apparatus.

### BACKGROUND

A real-time media service, such as a virtual reality (virtual reality, VR) service, an augmented reality (augmented reality, AR) service, a mixed reality (mixed reality, MR) service, or a cloud game service, has an extremely strict requirement on an end-to-end delay, and data is no longer processed at a granularity of a data packet in an encoding and transmission process. For example, when service data is encoded at an upper service layer (for example, a media layer) of a transmitting end, encoding is usually performed at a granularity of a media frame, a slice, or the like, that is, encoding processing may be independently performed based on the media frame, the slice, or the like. In addition, a receiving end of a service also decodes and displays received service data at the same granularity of the media frame, the slice, or the like, and a data unit such as the media frame or the slice usually includes a plurality of data packets. To represent the data unit such as the media frame or the slice, the data unit is referred to as a protocol data unit (protocol data unit, PDU) set (set) in a standard, to support data transmission at the granularity of the media frame, the slice, or the like at the upper service layer. For the PDU set, when one or more data packets in the PDU set are lost or damaged, it may be difficult to correctly decode and display the entire PDU set.

A transmission failure of a specific PDU set not only affects decoding and display of the PDU set, but also may affect decoding and display of a subsequent PDU set. How to ensure transmission of the PDU sets is an urgent problem that needs to be resolved.

### SUMMARY

This application provides a data transmission method in a communication system and a communication apparatus, to help ensure transmission of a PDU set.

According to a first aspect, a data transmission method in a communication system is provided. The method may be performed by an access network device, or may be performed by a module or a unit in the access network device. The module or the unit is collectively referred to as the access network device below for ease of description.

The method includes: The access network device receives a PDU set of a service used on a terminal, where the PDU set includes a first PDU set and a second PDU set, and a service to which the first PDU set belongs is the same as a service to which the second PDU set belongs; the access network device sends the first PDU set to the terminal within first duration; and the access network device sends the second PDU set to the terminal within second duration, where the first duration is different from the second duration.

That "a service to which the first PDU set belongs is the same as a service to which the second PDU set belongs" may be understood as follows: The first PDU set and the second PDU set belong to the same service; or the first PDU set and the second PDU set belong to a same QoS flow.

Optionally, the first PDU set and the second PDU set are different media frames or slices of a same media service.

Optionally, the media service includes at least one of the following services: a VR service, an AR service, an MR service, or a cloud game service.

According to the foregoing method, the access network device may transmit different PDU sets of a same service by using different duration. For example, for a key PDU set (for example, an I frame of the media service), the access network device may use long transmission duration; and for a non-key PDU set (for example, a P frame of the media service), the access network device may use short transmission duration. For another example, for a PDU set that affects a large quantity of PDU sets, the access network device may use long transmission duration; and for a PDU set that affects a small quantity of PDU sets, the access network device may use short transmission duration. That the access network device transmits the PDU set by using specific transmission duration may be understood as that the access network device transmits the PDU set within a time range specified by the transmission duration. This helps ensure transmission of the PDU set, and further helps improve service experience of a user.

"A quantity of PDU sets that are affected" is described by using an example. It is assumed that for a PDU set 1 to a PDU set 3, the PDU set 1 is independently encoded, the PDU set 2 is encoded with reference to the PDU set 1, and the PDU set 3 is encoded with reference to the PDU set 1 and the PDU set 2. To be specific, a quantity of PDU sets that depend on the PDU set 1 is 2, a quantity of PDU sets that depend on the PDU set 2 is 1, and a quantity of PDU sets that depend on the PDU set 3 is 0. In this way, the PDU set 1 may be transmitted within transmission duration 1, the PDU set 2 may be transmitted within transmission duration 2, and the PDU set 3 may be transmitted within transmission duration 3. The transmission duration 1 to the transmission duration 3 may have the following relationship: the transmission duration 1>the transmission duration 2>the transmission duration 3.

In some cases, the first duration and/or the second duration may be considered as transmission delay budgets/a transmission delay budget. When the first duration and the second duration are the transmission delay budgets, definitions of the transmission delay budgets may be the same as or different from a definition of an existing transmission delay budget.

With reference to the first aspect, in a possible implementation, a start moment of the first duration is an end moment of a PDU set delay budget (PDU set delay budget, PSDB) corresponding to the service to which the first PDU set belongs; or a start moment of the first duration is a moment at which a core network (for example, a user plane function network element) or the access network device receives the first PDU set, and the first duration is greater than a PSDB corresponding to the service to which the first PDU set belongs; and/or a start moment of the second duration is an end moment of a PSDB corresponding to the service to which the second PDU set belongs; or a start moment of the second duration is a moment at which a core network (for example, a user plane function network element) or the access network device receives the second PDU set, and the second duration is greater than a PSDB corresponding to the service to which the second PDU set belongs.

According to the foregoing method, after the PSDB corresponding to the service to which the PDU set belongs is exceeded, or when the access network device has a longer transmission delay budget for the PDU set, the access network device may continue to transmit the PDU set instead of discarding the PDU set. Duration based on which different PDU sets may continue to be transmitted may be different. In this way, it is ensured that the PDU set is correctly transmitted, and this helps ensure subsequent correct decoding and display of another PDU set that depends on the PDU set, to reduce impact on service experience of a user.

With reference to the first aspect or any implementation of the first aspect, in another possible implementation, the method further includes: The access network device discards the first PDU set when the first duration is reached or the first PDU set is successfully transmitted within the first duration; and/or the access network device discards the second PDU set when the second duration is reached or the second PDU set is successfully transmitted within the second duration.

The "discarding a PDU set" herein may also be replaced with "stopping transmission or sending of a PDU set" or "stopping transmission or sending of a PDU set and discarding the PDU set".

According to the foregoing method, a waste of radio air interface resources is reduced.

With reference to the first aspect or any implementation of the first aspect, in another possible implementation, the method further includes: The access network device determines, based on a type identifier carried in the first PDU set, that a type of the first PDU set is a first type; and the access network device determines the first duration based on the first type and a correspondence between the first type and the first duration; and/or the access network device determines, based on a type identifier carried in the second PDU set, that a type of the second PDU set is a second type; and the access network device determines the second duration based on the second type and a correspondence between the second type and the second duration.

The first type is different from the second type. For example, the first type may be an independent encoding type, and the second type may be a type (also referred to as a non-independent encoding type) of a PDU set that is encoded depending on another PDU set. For another example, the first type may be an independent encoding type, and the second type may be a type of a PDU set that is encoded depending on one PDU set or some PDU sets and on which another PDU set or some other PDU sets depend. For another example, the first type may be an independent encoding type, and the second type may be a type of a PDU set that is encoded depending on another PDU set but on which the another PDU set does not depend. The PDU set of the independent encoding type does not depend on the another PDU set during encoding. In addition, for the PDU set of the independent encoding type, a dependency relationship between PDU sets is terminated. To be specific, the PDU set of the independent encoding type and a PDU set that follows the PDU set of the independent encoding type do not depend on a PDU set preceding the PDU set of the independent encoding type.

A media service is used as an example. The first type may be an I frame in the media frame, and the second type may be a P frame in the media frame; or the first type may be a basic layer in media layered encoding, and the second type may be an enhancement layer in the media layered encoding.

In other words, different PDU sets may be distinguished based on types, that is, different PDU sets are PDU sets of different types.

According to the foregoing method, the access network device may determine a type of the PDU set based on a type identifier carried in the PDU set, to determine, based on a correspondence between the type and duration, duration for transmitting the PDU set. Different PDU set types may correspond to different duration. In this way, different transmission duration may be used for PDU sets of different types of a same service, to implement dynamic management and control of the transmission duration of the PDU sets, and ensure service transmission and help improve resource utilization. The media service is used as an example. A transmission failure of a specific PDU set (for example, the I frame) of the media service not only affects decoding and display of the PDU set, but also may affect decoding and display of a subsequent PDU set (for example, the P frame). According to the foregoing method, for example, the access network device may transmit the I frame within duration longer than the PSDB, and transmit the P frame in the PSDB, to ensure that the I frame is successfully transmitted. This helps implement decoding and display of the I frame and the P frame that is encoded depending on the I frame, to improve service experience of a user.

With reference to the first aspect or any implementation of the first aspect, in another possible implementation, the access network device may further determine the type of the PDU set based on at least one of the following information: a size of the PDU set, an encoding feature of the PDU set, or a traffic feature of a service flow in which the PDU set is located.

For example, it is assumed that the first type is the independent encoding type, and the second type is a type other than the independent encoding type. Because the PDU set of the independent encoding type is usually large, and a PDU set of the type other than the independent encoding type is small, when receiving a large PDU set, the access network device may determine that the PDU set is a PDU set of the independent encoding type (namely, a PDU set of the first type); and when receiving a small PDU set, the access network device may determine that the PDU set is a PDU set of the type other than the independent encoding type (namely, a PDU set of the second type).

With reference to the first aspect or any implementation of the first aspect, in another possible implementation, the method further includes: The access network device receives, from a session management function network element, the correspondence between the first type and the first duration and/or the correspondence between the second type and the second duration.

With reference to the first aspect or any implementation of the first aspect, in another possible implementation, the method further includes: The access network device obtains, based on a first quality of service (quality of service, QoS) flow identifier (QoS flow identifier, QFI) corresponding to the first PDU set, the first duration from a first QoS parameter of a first QoS flow corresponding to the first QFI, where the first QoS flow is used for transmission of a PDU set of a first type, and a type of the first PDU set is the first type; and/or the access network device obtains, based on a second QFI corresponding to the second PDU set, the second duration from a second QoS parameter of a second QoS flow corresponding to the second QFI, where the second QoS flow is used for transmission of a PDU set of a second type, and a type of the second PDU set is the second type. The first type is different from the second type.

According to the foregoing method, PDU sets of different types of a same service may be transmitted through different QoS flows. The access network device may obtain, based on a QFI of a PDU set, duration for transmitting the PDU set from a QoS parameter corresponding to the QFI. In this way, different transmission duration may be used for the PDU sets of the different types of the same service, to implement dynamic management and control of the transmission duration of the PDU sets, and ensure service transmission and help improve resource utilization. The media service is used as an example. A transmission failure of a specific PDU set (for example, the I frame) of the media service not only affects decoding and display of the PDU set, but also may affect decoding and display of a subsequent PDU set (for example, the P frame). According to the foregoing method, for example, the I frame of the media service may be transmitted through the first QoS flow, the P frame may be transmitted through the second QoS flow, and the first duration in the QoS parameters of the first QoS flow may be greater than the second duration in the QoS parameters of the second QoS flow. In this way, the access network device may transmit the I frame within longer duration (for example, duration greater than duration of the PSDB), to ensure that the I frame is successfully transmitted. This helps implement decoding and display of the I frame and the P frame that is encoded depending on the I frame, to improve service experience of a user.

With reference to the first aspect or any implementation of the first aspect, in another possible implementation, the method further includes: The access network device receives the first QoS parameter and/or the second QoS parameter from the session management function network element.

With reference to the first aspect or any implementation of the first aspect, in another possible implementation, the method further includes: The access network device receives scheduling policy information from the session management function network element, where the scheduling policy information indicates the access network device to send the PDU set based on the duration corresponding to the type of the PDU set.

With reference to the first aspect or any implementation of the first aspect, in another possible implementation, the first PDU set carries the first duration, and the second PDU set carries the second duration; and the method further includes: The access network device obtains the first duration from the first PDU set; and/or the access network device obtains the second duration from the second PDU set.

According to the foregoing method, the PDU set may carry the duration for transmitting the PDU set. For example, the duration may be added by the user plane function network element to the PDU set. The access network device may transmit the PDU set within the duration carried in the PDU set. The different PDU sets of the same service may carry different duration. In this way, different transmission duration may be used for the different PDU sets of the same service, to implement dynamic management and control of the transmission duration of the PDU sets, and ensure service transmission and help improve resource utilization. The media service is used as an example. The I frame of the media service may carry the long first duration, and the P frame may carry the short second duration. In this way, the access network device may transmit the I frame within the longer duration (for example, the duration greater than the duration of the PSDB), to ensure that the I frame is successfully transmitted. This helps implement decoding and display of the I frame and the P frame that is encoded depending on the I frame, to improve the service experience of the user.

In addition, the method helps reduce implementation complexity of the access network device.

With reference to the first aspect or any implementation of the first aspect, in another possible implementation, the method further includes: The access network device receives scheduling policy information from the session management function network element, where the scheduling policy information indicates the access network device to send the PDU set based on the duration carried in the PDU set.

With reference to the first aspect or any implementation of the first aspect, in another possible implementation, the method further includes: The access network device determines the first duration based on a quantity of PDU sets that depend on the first PDU set; and/or the access network device determines the second duration based on a quantity of PDU sets that depend on the second PDU set.

According to the foregoing method, the access network device may determine, based on a quantity of PDU sets that depend on a specific PDU set, duration for transmitting the PDU set. For the different PDU sets of the same service, quantities of PDU sets that depend on the PDU set may be different, and determined transmission duration may also be different. In this way, different transmission duration may be used for the different PDU sets of the same service, to implement dynamic management and control of the transmission duration of the PDU sets, and ensure service transmission and help improve resource utilization.

With reference to the first aspect or any implementation of the first aspect, in another possible implementation, the method further includes: The access network device receives a dependency relationship between different PDU sets from the session management function network element, and the access network device determines, based on the dependency relationship, the quantity of PDU sets that depend on the first PDU set and/or the quantity of PDU sets that depend on the second PDU set. The media service is used as an example. The dependency relationship may be an inter-frame reference relationship.

With reference to the first aspect or any implementation of the first aspect, in another possible implementation, an end moment of the first duration and/or an end moment of the second duration are/is moments/a moment at which the access network device receives a next PDU set that carries an independent encoding type identifier.

For the PDU set of the independent encoding type, the dependency relationship between the PDU sets is terminated. To be specific, the PDU set of the independent encoding type and the PDU set that follows the PDU set of the independent encoding type do not depend on the PDU set preceding the PDU set of the independent encoding type. Therefore, according to the foregoing method, a transmission failure of the PDU set can be avoided as much as possible, to help avoid impact of the transmission failure of the PDU set on decoding and display of a subsequent PDU set that depends on the PDU set.

With reference to the first aspect or any implementation of the first aspect, in another possible implementation, an end moment of the first duration is a moment at which the access network device receives a third PDU set, and the third PDU set is a 1^{st} PDU set that follows the first PDU set and that does not have a dependency relationship with the first PDU set; and/or an end moment of the second duration is a moment at which the access network device receives a fourth PDU set, and the fourth PDU set is a 1^{st} PDU set that follows the second PDU set and that does not have a dependency relationship with the second PDU set.

According to the foregoing method, the transmission failure of the PDU set can be avoided as much as possible, to help avoid impact of the transmission failure of the PDU set on transmission, decoding, and display of the subsequent PDU set that depends on the PDU set.

With reference to the first aspect or any implementation of the first aspect, in another possible implementation, an end moment of the first duration is an earlier one of an end moment of first preset duration and the following moment: a moment at which the access network device receives a next PDU set that carries an independent encoding type identifier; or a moment at which the access network device receives a third PDU set, and the third PDU set is a 1^{st} PDU set that follows the first PDU set and that does not have a dependency relationship with the first PDU set; and/or an end moment of the second duration is an earlier one of an end moment of second preset duration and the following moment: a moment at which the access network device receives a next PDU set that carries an independent encoding type identifier; or a moment at which the access network device receives a fourth PDU set, and the fourth PDU set is a 1^{st} PDU set that follows the second PDU set and that does not have a dependency relationship with the second PDU set.

A first preset value and a second preset value may be expected longest transmission duration. The first preset duration and the second preset duration may be the same or may be different. For example, different preset duration may be set for the PDU sets of the different types. The media service is used as an example. A media frame of the media service may be referred to as the PDU set. It is assumed that the media service includes media frames of two types: the I frame and the P frame. Long preset duration may be set for the I frame, and short preset duration may be set for the P frame.

According to the foregoing method, the transmission failure of the PDU set can be avoided as much as possible, to help avoid impact of the transmission failure of the PDU set on decoding and display of the subsequent PDU set that depends on the PDU set. In addition, a waste of resources caused by excessively long transmission duration of the PDU set can be avoided.

With reference to the first aspect or any implementation of the first aspect, in another possible implementation, the method further includes: The access network device receives the first preset duration and/or the second preset duration from the session management function network element.

With reference to the first aspect or any implementation of the first aspect, in another possible implementation, the third PDU set carries a first sequence number of a PDU set on which the third PDU set depends, and the first sequence number does not include a sequence number of the first PDU set; and/or the fourth PDU set carries a second sequence number of a PDU set on which the fourth PDU set depends, and the second sequence number does not include a sequence number of the second PDU set.

With reference to the first aspect or any implementation of the first aspect, in another possible implementation, the method further includes: The access network device receives the scheduling policy information from the session management function network element, where the scheduling policy information indicates the access network device to perform dynamic scheduling on the PDU set.

According to a second aspect, a data transmission method in a communication system is provided. The method may be performed by a user plane function network element, or may be performed by a module or a unit in the user plane function network element. The module or the unit is collectively referred to as the user plane function network element below for ease of description.

The method includes: The user plane function network element receives a PDU set of a service used on a terminal, where the PDU set includes a first PDU set and a second PDU set, and a service to which the first PDU set belongs is the same as a service to which the second PDU set belongs; the user plane function network element adds first duration to the first PDU set based on a quantity of PDU sets that depend on the first PDU set, where the first duration is duration based on which an access network device sends the first PDU set; the user plane function network element adds second duration to the second PDU set based on a quantity of PDU sets that depend on the second PDU set, where the second duration is duration based on which the access network device sends the second PDU set; the user plane function network element sends, to the access network device, the first PDU set that carries the first duration; and the user plane function network element sends, to the access network device, the second PDU set that carries the second duration. The first duration is different from the second duration.

That "a service to which the first PDU set belongs is the same as a service to which the second PDU set belongs" may be understood as follows: The first PDU set and the second PDU set belong to the same service; or the first PDU set and the second PDU set belong to a same QoS flow.

Optionally, the first PDU set and the second PDU set are different media frames or slices of a same media service.

Optionally, the media service includes at least one of the following services: a VR service, an AR service, an MR service, or a cloud game service.

According to the foregoing method, the user plane function network element may add transmission duration to the PDU set, so that after receiving the PDU set, the access network device may transmit the PDU set within the duration carried in the PDU set. The different PDU sets of the same service may carry different duration. In this way, different transmission duration may be used for the different PDU sets of the same service, to implement dynamic management and control of the transmission duration of the PDU sets, and ensure service transmission and help improve resource utilization. The media service is used as an example. The I frame of the media service may carry the long first duration, and the P frame may carry the short second duration. In this way, the access network device may transmit the I frame within the longer duration (for example, the duration greater than the duration of the PSDB), to ensure that the I frame is successfully transmitted. This helps implement decoding and display of the I frame and the P frame that is encoded depending on the I frame, to improve the service experience of the user.

In addition, the user plane function network element adds, to the PDU set, duration for transmitting the PDU set, to help reduce implementation complexity of the access network device.

With reference to the second aspect, in a possible implementation, a start moment of the first duration is an end moment of a PSDB corresponding to the service to which the first PDU set belongs; or a start moment of the first duration is a moment at which a core network (for example, a user plane function network element) or the access network device receives the first PDU set, and the first duration is greater than a PSDB corresponding to the service to which the first PDU set belongs; and/or a start moment of the second duration is an end moment of a PSDB corresponding to the service to which the second PDU set belongs; or a start moment of the second duration is a moment at which a core network (for example, a user plane function network element) or the access network device receives the second PDU set, and the second duration is greater than a PSDB corresponding to the service to which the second PDU set belongs.

According to the foregoing method, after a PSDB corresponding to a service to which the PDU set belongs is exceeded, or when the access network device has a longer transmission delay budget for the PDU set, the access network device may continue to transmit the PDU set instead of discarding the PDU set. Duration based on which different PDU sets may continue to be transmitted may be different. In this way, it is ensured that the PDU set is correctly transmitted, and this helps ensure subsequent correct decoding and display of another PDU set that depends on the PDU set, to reduce impact on service experience of a user.

With reference to the second aspect or any implementation of the second aspect, in another possible implementation, the method further includes: The user plane function network element receives a dependency relationship between different PDU sets from a session management function network element; and the user plane function network element determines, based on the dependency relationship, the quantity of PDU sets that depend on the first PDU set and/or the quantity of PDU sets that depend on the second PDU set.

With reference to the second aspect or any implementation of the second aspect, in another possible implementation, the method further includes: The user plane function network element receives marking policy information from a session management function network element, where the marking policy information indicates to add the duration to the PDU set.

According to a third aspect, a data transmission method in a communication system is provided. The method may be performed by a session management function network element, or may be performed by a module or a unit in the session management function network element. The module or the unit is collectively referred to as the session management function network element below for ease of description.

The method includes: The session management function network element receives first information, where the first information indicates to perform scheduling and transmission of different duration on different PDU sets; and the session management function network element sends scheduling policy information to an access network device based on the first information, where the scheduling policy information indicates a scheduling manner of a PDU set, and the scheduling manner includes at least one of the following: transmitting the PDU set based on duration corresponding to a type of the PDU set, transmitting the PDU set based on duration carried in the PDU set, or performing dynamic scheduling on the PDU set.

According to the foregoing method, different transmission duration may be used for different PDU sets. This helps ensure transmission of the PDU sets.

With reference to the third aspect, in a possible implementation, the first information includes at least one of the following information: a correspondence between different PDU set types and duration, a dependency relationship between different PDU sets, preset duration, or a plurality of QoS parameters, a plurality of QoS flows corresponding to the plurality of QoS parameters are used for transmission of a plurality of different types of PDU sets, and each of the plurality of QoS parameters includes duration for transmitting a PDU set; and the method further includes: The session management function network element sends at least one of the following information to the access network device: the correspondence, the dependency relationship, the preset duration, or the plurality of QoS parameters.

With reference to the third aspect or any implementation of the third aspect, in another possible implementation, when the scheduling policy information indicates to transmit the PDU set based on the duration carried in the PDU set, the method further includes: The session management function network element sends marking policy information to a user plane function network element, where the marking policy information indicates to add the duration to the PDU set.

According to the foregoing method, the user plane function network element may add, to the PDU set, duration for transmitting the PDU set, to help reduce implementation complexity of the access network device.

With reference to the third aspect or any implementation of the third aspect, in another possible implementation, a start moment of the duration is an end moment of a PSDB corresponding to the service to which the PDU set belongs; or a start moment of the duration is a moment at which a core network (for example, a user plane function network element) or the access network device receives the PDU set, and the duration is greater than a PSDB corresponding to the service to which the PDU set belongs.

According to a fourth aspect, a data transmission method in a communication system is provided. The method may be performed by a policy control function network element, or may be performed by a module or a unit in the policy control function network element. The module or the unit is collectively referred to as the policy control function network element below for ease of description.

The method includes: The policy control function network element obtains first information, where the first information indicates to perform scheduling and transmission of different duration on different PDU sets; and the policy control function network element sends the first information to a session management function network element.

According to the foregoing method, different transmission duration may be used for different PDU sets. This helps ensure transmission of the PDU sets.

With reference to the fourth aspect, in a possible implementation, the first information includes at least one of the following information: a correspondence between different PDU set types and duration, a dependency relationship between different PDU sets, preset duration, or a plurality of QoS parameters, a plurality of QoS flows corresponding to the plurality of QoS parameters are used for transmission of a plurality of different types of PDU sets, and each of the plurality of QoS parameters includes duration for transmitting a PDU set.

With reference to the fourth aspect or any implementation of the fourth aspect, in another possible implementation, the method further includes: The policy control function network element receives an application function request message from an application function network element, where the application function request message includes at least one of the following information: the correspondence, the dependency relationship, or the preset duration; and that the policy control function network element obtains the first information includes: The policy control function network element generates the first information based on the application function request message from the application function network element.

With reference to the fourth aspect or any implementation of the fourth aspect, in another possible implementation, a start moment of the duration is an end moment of a PSDB corresponding to the service to which the PDU set belongs; or a start moment of the duration is a moment at which a core network (for example, a user plane function network element) or the access network device receives the PDU set, and the duration is greater than a PSDB corresponding to the service to which the PDU set belongs.

According to a fifth aspect, a data transmission method in a communication system is provided. The method may be performed by an application function network element, or may be performed by a module or a unit in the application function network element. The module or the unit is collectively referred to as the application function network element below for ease of description.

The method includes: The application function network element sends an application function request message to a policy control function network element, where the application function request message includes at least one of the following information: a correspondence between different PDU set types and duration, a dependency relationship between different PDU sets, or preset duration, and the duration is duration for sending a PDU set by an access network device.

According to the foregoing method, different transmission duration may be used for different PDU sets. This helps ensure transmission of the PDU sets.

With reference to the fifth aspect, in a possible implementation, a start moment of the duration is an end moment of a PSDB corresponding to the service to which the PDU set belongs; or a start moment of the duration is a moment at which a core network (for example, a user plane function network element) or the access network device receives the PDU set, and the duration is greater than a PSDB corresponding to the service to which the PDU set belongs.

With reference to the fifth aspect or any implementation of the fifth aspect, in another possible implementation, the method further includes: The application function network element generates the first information.

According to a sixth aspect, a data transmission method in a communication system is provided. The method includes: A first network element receives a PDU set of a service used on a terminal, where the PDU set includes a first PDU set and a second PDU set, and a service to which the first PDU set belongs is the same as a service to which the second PDU set belongs; the first network element sends the PDU set to a second network element; the second network element sends the first PDU set to the terminal within first duration; and the second network element sends the second PDU set to the terminal within second duration. The first duration is different from the second duration.

Optionally, the first network element may be a user plane function network element, and the second network element may be an access network device. The following describes the method in the sixth aspect by using an example in which the first network element may be the user plane function network element and the second network element may be the access network device.

It should be noted that, the method may be performed by the access network device and the user plane function network element, or may be performed by modules or units in the access network device and the user plane function network element. The modules or the units are collectively referred to as the access network device and the user plane function network element below for ease of description.

With reference to the sixth aspect, in a possible implementation, a start moment of the first duration is an end moment of a PSDB corresponding to the service to which the first PDU set belongs; or a start moment of the first duration is a moment at which the access network device receives the first PDU set, and the first duration is greater than a PSDB corresponding to the service to which the first PDU set belongs; and/or a start moment of the second duration is an end moment of a PSDB corresponding to the service to which the second PDU set belongs; or a start moment of the second duration is a moment at which the access network device receives the second PDU set, and the second duration is greater than a PSDB corresponding to the service to which the second PDU set belongs.

With reference to the sixth aspect or any implementation of the sixth aspect, in another possible implementation, the method further includes: The access network device discards the first PDU set when the first duration is reached or the first PDU set is successfully transmitted within the first duration; and/or the access network device discards the second PDU set when the second duration is reached or the second PDU set is successfully transmitted within the second duration.

With reference to the sixth aspect or any implementation of the sixth aspect, in another possible implementation, the method further includes: The user plane function network element adds a type identifier to the first PDU set and/or the second PDU set; the access network device determines, based on the type identifier carried in the first PDU set, that a type of the first PDU set is a first type; and the access network device determines the first duration based on the first type and a correspondence between the first type and the first duration; and/or the access network device determines, based on the type identifier carried in the second PDU set, that the type of the second PDU set is a second type; and the access network device determines the second duration based on the second type and a correspondence between the second type and the second duration.

With reference to the sixth aspect or any implementation of the sixth aspect, in another possible implementation, the method further includes: The user plane function network element adds a first QFI to the first PDU set, and maps the first PDU set to a first QoS flow, where the first QoS flow is used for transmission of a PDU set of a first type; and/or the user plane function network element adds a second QFI to the second PDU set, and maps the second PDU set to a second QoS flow, where the second QoS flow is used for transmission of a PDU set of a second type; the access network device obtains, based on the first QFI corresponding to the first PDU set, the first duration from a first QoS parameter of a first QoS flow corresponding to the first QFI; and/or the access network device obtains, based on the second QFI corresponding to the second PDU set, the second duration from a second QoS parameter of a second QoS flow corresponding to the second QFI.

With reference to the sixth aspect or any implementation of the sixth aspect, in another possible implementation, the method further includes: The user plane function network element adds the first duration to the first PDU set based on a quantity of PDU sets that depend on the first PDU set; and/or the user plane function network element adds the second duration to the second PDU set based on a quantity of PDU sets that depend on the second PDU set; the access network device obtains the first duration from the first PDU set; and/or the access network device obtains the second duration from the second PDU set.

With reference to the sixth aspect or any implementation of the sixth aspect, in another possible implementation, the method further includes: The access network device determines the first duration based on a quantity of PDU sets that depend on the first PDU set; and/or the access network device determines the second duration based on a quantity of PDU sets that depend on the second PDU set.

With reference to the sixth aspect or any implementation of the sixth aspect, in another possible implementation, an end moment of the first duration and/or an end moment of the second duration are/is moments/a moment at which the access network device receives a next PDU set that carries an independent encoding type identifier; and the method further includes: The user plane function network element adds the independent encoding type identifier to a PDU set of an independent encoding type.

With reference to the sixth aspect or any implementation of the sixth aspect, in another possible implementation, the end moment of the first duration is an earlier one of an end moment of first preset duration and a moment at which the access network device receives the next PDU set that carries the independent encoding type identifier; and/or the end moment of the second duration is an earlier one of an end moment of second preset duration and a moment at which the access network device receives the next PDU set that carries the independent encoding type identifier; and the method further includes: The user plane function network element adds the independent encoding type identifier to a PDU set of an independent encoding type.

With reference to the sixth aspect or any implementation of the sixth aspect, in another possible implementation, an end moment of the first duration is a moment at which the access network device receives a third PDU set, and the third PDU set is a 1^{st} PDU set that follows the first PDU set and that does not have a dependency relationship with the first PDU set; and/or an end moment of the second duration is a moment at which the access network device receives a fourth PDU set, and the fourth PDU set is a 1^{st} PDU set that follows the second PDU set and that does not have a dependency relationship with the second PDU set.

With reference to the sixth aspect or any implementation of the sixth aspect, in another possible implementation, the end moment of the first duration is an earlier one of the end moment of the first preset duration and a moment at which the access network device receives a third PDU set, and the third PDU set is a 1^{st} PDU set that follows the first PDU set and that does not have a dependency relationship with the first PDU set; and/or the end moment of the second duration is an earlier one of the end moment of the second preset duration and a moment at which the access network device receives a fourth PDU set, and the fourth PDU set is a 1^{st} PDU set that follows the second PDU set and that does not have a dependency relationship with the second PDU set.

With reference to the sixth aspect or any implementation of the sixth aspect, in another possible implementation, the third PDU set carries a first sequence number of a PDU set on which the third PDU set depends, and the first sequence number does not include a sequence number of the first PDU set; and/or the fourth PDU set carries a second sequence number of a PDU set on which the fourth PDU set depends, and the second sequence number does not include a sequence number of the second PDU set.

With reference to the sixth aspect or any implementation of the sixth aspect, in another possible implementation, the first PDU set and the second PDU set are carried on a same QoS flow bearer.

With reference to the sixth aspect or any implementation of the sixth aspect, in another possible implementation, the first PDU set and the second PDU set are different media frames or slices of a same media service.

With reference to the sixth aspect or any implementation of the sixth aspect, in another possible implementation, the media service includes at least one of the following services: a VR service, an AR service, an MR service, or a cloud game service.

For technical effects of the method shown in the sixth aspect and the possible implementations of the sixth aspect, refer to the technical effects in the first aspect and the possible implementations of the first aspect, and the technical effects in the second aspect and the possible implementations of the second aspect. Details are not described herein again.

According to a seventh aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is an access network device, a user plane function network element, a session management function, a policy control function network element, or an application function network element. When the apparatus is the access network device, the user plane function network element, the session management function, the policy control function network element, or the application function network element, the communication unit may be a transceiver, an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in an access network device, a user plane function network element, a session management function, a policy control function network element, or an application function network element. When the apparatus is the chip, the chip system, or the circuit used in the access network device, the user plane function network element, the session management function, the policy control function network element, or the application function network element, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is an access network device, a user plane function network element, a session management function, a policy control function network element, or an application function network element.

In another implementation, the apparatus is a chip, a chip system, or a circuit used in an access network device, a user plane function network element, a session management function, a policy control function network element, or an application function network element.

According to a ninth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a tenth aspect, a processor is provided, configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eleventh aspect, a computer-readable storage medium is provided. The computer-readable storage medium stores program code to be executed by a device, and the program code is used to perform the method provided in any one of the foregoing aspects or the implementations of the foregoing aspects.

According to a twelfth aspect, a computer program product including instructions is provided. When the computer program product is run on a computer, the computer is enabled to perform the method provided in any one of the foregoing aspects or the implementations of the foregoing aspects.

According to a thirteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

According to a fourteenth aspect, a communication system is provided, including at least one of the foregoing access network device, the user plane function network element, the session management function network element, the policy control function network element, or the application function network element.

### BRIEF DESCRIPTION OF DRAWINGS

FIG. 1 is a diagram of a network architecture to which an embodiment of this application is applicable;
FIG. 2 is a schematic flowchart of a data transmission method 200 in a communication system according to this application;
FIG. 3 is a schematic flowchart of signaling exchange on a control plane according to an embodiment of this application;
FIG. 4A and FIG. 4B show an example of a data transmission method in a communication system according to this application;
FIG. 5A and FIG. 5B show another example of a data transmission method in a communication system according to this application;
FIG. 6A and FIG. 6B show another example of a data transmission method in a communication system according to this application;
FIG. 7 is a diagram of a structure of an apparatus according to an embodiment of this application; and
FIG. 8 is a diagram of another structure of an apparatus according to an embodiment of this application.

### DESCRIPTION OF EMBODIMENTS

The following describes technical solutions of embodiments of this application with reference to the accompanying drawings.

For ease of understanding embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of information is described as indicating information I, the information may directly indicate I or indirectly indicate I, but it does not necessarily indicate that the information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely used to explain functions of the features by using examples. For detailed content of the definitions, refer to the related technology.

In the following embodiments, first, second, third, fourth, and various numbers are merely used for differentiation for ease of description, but are not used to limit the scope of embodiments of this application, for example, used for differentiation between different fields and different information.

"Predefinition" may be implemented by prestoring, in the device, corresponding code, a table, or another format that may indicate related information. A specific implementation of the "predefinition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, words such as "example", "for example", "exemplarily", and "in an (another) example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The terms "include", "have", and their variants all mean "include but are not limited to", unless otherwise specifically emphasized in another manner.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In embodiments of this application, related descriptions about sending a message, information, or data by a network element A to a network element B, and receiving, by the network element B, the message, the information, or the data from the network element A are intended to describe a network element to which the message, the information, or the data is to be sent. Whether the message, the information, or the data is directly sent or indirectly sent through another network element is not limited.

In embodiments of this application, descriptions such as "when ...", "in a case of ...", and "if" all mean that the device performs corresponding processing in an objective case, and are not limited to time, and the device is not required to perform a determining action in an implementation. This does not mean that there is another limitation.

For ease of understanding, a communication system to which embodiments of this application may be applied is first described.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system such as a satellite communication system. Embodiments of this application may be further applied to a device-to-device (device-to-device, D2D) communication system, a sidelink (sidelink, SL) communication system, a machine-to-machine (machine-to-machine, M2M) communication system, a machine-type communication (machine-type communication, MTC) system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

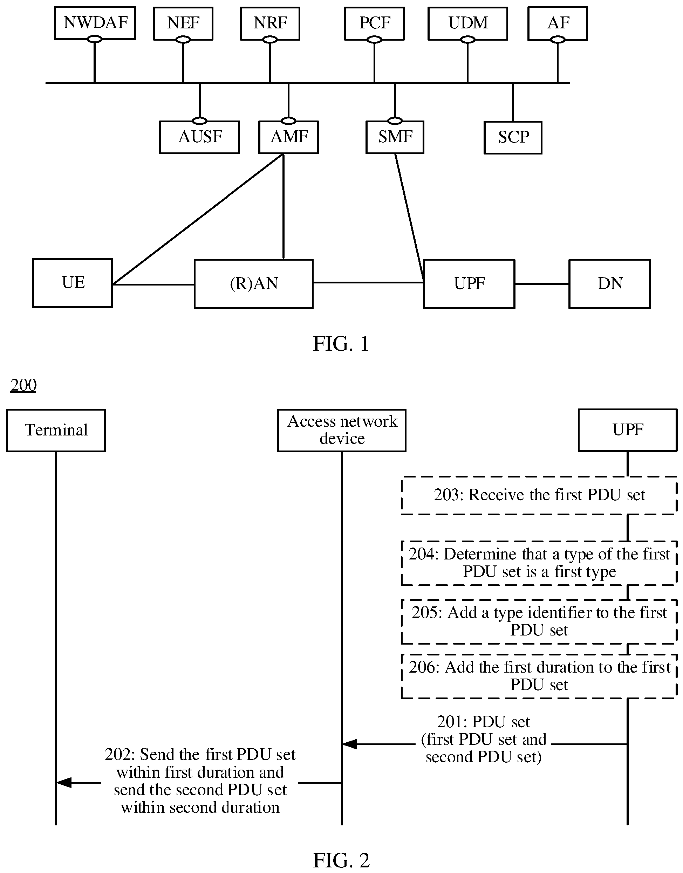

In an example, FIG. 1 is a diagram of a network architecture.

As shown in FIG. 1, a 5G system (the 5th generation system, 5GS) is used as an example of the network architecture. The network architecture may include three parts: a user equipment (user equipment, UE) part, a data network (data network, DN) part, and an operator network part. The operator network may include one or more of the following network elements: a (radio) access network ((radio) access network, (R)AN) device, a user plane function (user plane function, UPF) network element, an authentication server function (authentication server function, AUSF) network element, an access and mobility management function (access and mobility management function, AMF) network element, a session management function (session management function, SMF) network element, a service communication proxy (service communication proxy, SCP) network element, a network data analytics function (network data analytics function, NWDAF) network element, a network exposure function (network exposure function, NEF) network element, a network repository function (network repository function, NRF) network element, a policy control function (policy control function, PCF) network element, a unified data management (unified data management, UDM) network element, and an application function (application function, AF) network element. In the foregoing operator network, parts other than the RAN part may be referred to as a core network part.

In this application, the user equipment, the (radio) access network device, the UPF network element, the AUSF network element, the AMF network element, the SMF network element, the SCP network element, the NWDAF network element, the NEF network element, the NRF network element, the PCF network element, the UDM network element, and the AF network element are respectively referred to as UE, a (R)AN, a UPF, an AUSF, a UDR, an AMF, an SMF, an SCP, an NWDAF, a NEF, an NRF, a PCF, a UDM, and an AF for short.

The following briefly describes each network element related in FIG. 1.

### 1. UE

The UE in this application may also be referred to as a terminal, a user, an access terminal, a subscriber unit, a subscriber station, a mobile station, a remote station, a remote terminal, a mobile device, a user terminal, a terminal device, a wireless communication device, a user agent, a user apparatus, or the like. For ease of description, the terminal is used as a unified name below.

The terminal is a device that can access a network. The terminal and the (R)AN may communicate with each other by using an air interface technology (for example, an NR or LTE technology). Terminals may also communicate with each other by using an air interface technology (for example, the NR or LTE technology). The terminal may be a mobile phone (mobile phone), a pad (pad), a computer with a wireless transceiver function, a virtual reality (virtual reality, VR) terminal, an augmented reality (augmented reality, AR) terminal, a terminal in satellite communication, a terminal in an integrated access and backhaul (integrated access and backhaul, IAB) link system, a terminal in a Wi-Fi communication system, a terminal in industrial control (industrial control), a terminal in self-driving (self-driving), a terminal in remote medical (remote medical), a terminal in a smart grid (smart grid), a terminal in transportation safety (transportation safety), a terminal in a smart city (smart city), a terminal in a smart home (smart home), or the like.

A specific technology used by the UE and a specific device form of the UE are not limited in this embodiment of this application.

### 2. (R)AN

The (R)AN in this application may be a device configured to communicate with a terminal, or may be a device that connects the terminal to a wireless network.

The (R)AN may be a node in a radio access network. The (R)AN may be a base station (base station), an evolved NodeB (evolved NodeB, eNodeB), a transmission reception point (transmission reception point, TRP), a home base station (for example, a home evolved NodeB, or a home NodeB, HNB), a Wi-Fi access point (access point, AP), a mobile switching center, a next generation base station (next generation NodeB, gNB) in a 5G mobile communication system, an access network device in an open radio access network (open radio access network, O-RAN, or open RAN), a next generation base station in a 6th generation (6th generation, 6G) mobile communication system, a base station in a future mobile communication system, or the like. Alternatively, the network device may be a module or a unit that implements some of functions of the base station, for example, may be a central unit (central unit, CU), a distributed unit (distributed unit, DU), a remote radio unit (remote radio unit, RRU), or a baseband unit (baseband unit, BBU). Alternatively, the (R)AN may be a device or the like that undertakes a base station function in a D2D communication system, a V2X communication system, an M2M communication system, and an IoT communication system. Alternatively, the (R)AN may be a network device in an NTN. In other words, the (R)AN may be deployed on a high-altitude platform or a satellite. The (R)AN may be a macro base station, may be a micro base station or an indoor base station, or may be a relay node, a donor node, or the like.

A specific technology, a device form, and a name used by the (R)AN are not limited in embodiments of this application. For ease of description, the access network device is used as a unified name of the (R)AN below.

### 3. UPF

A main function of the UPF is data packet routing and forwarding, providing support in routing a service flow to a data network via a mobility anchor point and an uplink classifier, supporting a multi-homed PDU session via a branch point, and the like.

### 4. DN

The DN is mainly used as an operator network that provides a data service for a terminal, for example, the internet (Internet), a third-party service network, or an IP multi-media service (IP multi-media service, IMS) network.

### 5. AUSF

A main function of the AUSF is to provide an authentication service. 3rd generation partnership project (3rd generation partnership project, 3GPP) and non-3GPP access authentication are supported.

### 6. AMF

Main functions of the AMF include user registration management, reachability detection, SMF node selection, mobile state transition management, and the like.

### 7. SMF

Main functions of the SMF are to control session establishment, modification, and deletion, user plane node selection, and the like.

### 8. SCP

The SCP is mainly responsible for indirect communication between a network element and a corresponding network element service.

### 9. NWDAF

A main function of the NWDAF is to provide functions of network data collection and analysis based on technologies such as big data and artificial intelligence.

### 10. NEF

The NEF is mainly used to securely expose a service and a capability that are provided by a 3GPP network function, and support secure interaction between the 3GPP network and a third-party application.

### 11. NRF

The NRF is mainly used to store a network function entity, description information of a service provided by the network function entity, and the like.

### 12. PCF

The PCF is mainly responsible for a policy control decision, provision of a policy rule of a control plane function, a traffic-based charging control function, and the like.

### 13. UDM

The UDM is mainly responsible for subscription data management of a terminal, including storage and management of a terminal identifier, access authorization of the terminal, and the like.

### 14. AF

The AF mainly supports interacting with a 3GPP core network to provide a service, for example, affecting a data routing decision, a policy control function, or providing a third-party service for a network. The AF may be an AF deployed on an operator network, or may be a third-party AF.

In the network architecture shown in FIG. 1, the network elements may communicate with each other through interfaces. The interfaces between the network elements may be point-to-point interfaces, or may be service-based interfaces. This is not limited in this application.

It should be understood that, the network architecture shown above is merely an example for description, and a network architecture to which embodiments of this application are applicable is not limited thereto. Embodiments of this application are applicable to any network architecture that can be used to implement functions of the foregoing network elements.

It should be further understood that, the functions or the network elements such as the AMF, the SMF, the UPF, the PCF, the UDM, the AUSF, the SCP, the NWDAF, the NEF, the NRF, and the AF shown in FIG. 1 may be understood as network elements configured to implement different functions, and for example, may be combined into a network slice as required. These network elements may be independent devices, or may be integrated into a same device to implement different functions, or may be network elements in a hardware device, or may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, some or all of the foregoing network elements may still use terms in 5G, or may use other names.

In an existing QoS mechanism, service assurance is performed at a granularity of a data packet. For example, service assurance is performed by using a data packet error rate (packet error rate, PER) and a data packet delay budget (packet delay budget, PDB) in QoS parameters. Data packets of a specific service are mapped to a same QoS flow, and policy processing and transmission are performed on the data packets one by one by using same QoS parameters. In other words, same and undifferentiated processing is performed on all data packets in one QoS flow in a transmission process.

The PDB identifies a longest delay of transmitting a data packet in a wireless communication network, that is, the data packet needs to be transmitted to a terminal in the wireless communication network within PDB duration. The PDB may include a core network data packet delay budget (core network PDB, CN-PDB) (namely, a transmission delay budget between a UPF and an access network device) and an access network data packet delay budget (access network PDB, AN-PDB) (namely, a transmission delay budget between the access network device and the terminal). It should be noted that, the PDB mentioned in embodiments of this application may be a complete PDB, or may be an AN-PDB or a CN-PDB. This is not limited herein. If transmission duration of a specific data packet exceeds a corresponding PDB of the data packet, the data packet may be discarded. A specific operation depends on an implementation.

In research of extended reality and media service (extended reality and media service, XRM), a real-time media service, for example, a currently emerging service such as a virtual reality (virtual reality, VR) service, an augmented reality (augmented reality, AR) service, a mixed reality (mixed reality, MR) service, or a cloud game service, has an extremely strict requirement on an end-to-end delay, and data processing in an encoding and transmission process is no longer performed at a granularity of a data packet. For example, when service data is encoded at an upper service layer (for example, a media layer) of a transmitting end, encoding is usually performed at a granularity such as a media frame or a slice, that is, encoding processing may be independently performed based on the media frame, the slice, or the like. In addition, a receiving end of a service also decodes and displays received service data at the same granularity such as the media frame or the slice, and a data unit such as the media frame or the slice usually includes a plurality of data packets.

To represent the data unit such as the media frame or the slice, the data unit is referred to as a protocol data unit set (protocol data unit set, PDU set) in a standard, to support data transmission at the granularity such as the media frame or the slice at the upper service layer. The PDU set is a basic data unit that can be independently processed at the upper service layer (namely, an application layer). The PDU set may also be referred to as a PDU set, a PDU set, or the like. For ease of description, the PDU set is used as a unified name below. For the PDU set, when one or more data packets in the PDU set are lost or damaged, it may be difficult to correctly decode and display the entire PDU set.

To support data transmission at a PDU set granularity in the XRM and ensure service experience of a user, QoS parameters at the PDU set granularity are introduced into current research, for example, a PDU set error rate (PDU set error rate, PSER) and a PDU set delay budget (PDU set delay budget, PSDB). The PSER may correspond to the foregoing PER, and the PSDB may correspond to the foregoing PDB. Similarly, the PSDB indicates the longest delay of transmitting the PDU set in the wireless communication network. To be specific, all the data packets in the PDU set need to be transmitted to the terminal in the wireless communication network within PSDB duration starting from a time point at which the PDU set arrives in the wireless communication network.

However, in the XRM, a transmission failure of a specific PDU set not only affects decoding and display of the PDU set, but also may affect decoding and display of a subsequent PDU set, and different PDU sets may affect different quantities of PDU sets. For example, for a PDU set 1 to a PDU set 4, the PDU set 1 is independently encoded, the PDU set 2 is encoded with reference to the PDU set 1, the PDU set 3 is encoded with reference to the PDU set 1 and the PDU set 2, the PDU set 4 is encoded with reference to the PDU set 3, and the PDU set 1 to the PDU set 4 are sequentially transmitted. In this case, the PDU set 1 affects the PDU set 2 to the PDU set 4 that are transmitted after the PDU set 1, the PDU set 2 affects the PDU set 3 and the PDU set 4 that are transmitted after the PDU set 2, and the PDU set 3 affects the PDU set 4 transmitted after the PDU set 3. In this case, how to ensure transmission of the PDU sets is an urgent problem that needs to be resolved.

In view of this problem, this application provides a data transmission method in a communication system and a communication apparatus, so that different transmission duration can be used for PDU sets of different types, to help ensure transmission of the PDU sets.

The following describes a data transmission method in a communication system provided in this application with reference to the accompanying drawings.

FIG. 2 is a schematic flowchart of a data transmission method 200 in a communication system according to this application.

The method 200 includes at least a part of the following content.

Step 201: A UPF sends a PDU set to an access network device.

Correspondingly, the access network device receives the PDU set from the UPF.

The PDU set may include a first PDU set and a second PDU set, and a service to which the first PDU set belongs is the same as a service to which the second PDU set belongs.

In a possible implementation, before step 201, the UPF may receive the PDU set from an application server (application server, AS).

A VR service is used as an example. The UPF may receive a media unit such as a video frame or a slice of the VR service from an application server of the VR service. The video frame or the slice herein may be referred to as the PDU set, and the first PDU set and the second PDU set are different media frames or slices of the VR service. Other XRM or real-time media services, such as an AR service, an MR service, or a cloud game, are similar to the VR service, and details are not described again.

Step 202: The access network device sends the PDU set to a terminal.

Correspondingly, the terminal receives the PDU set from the access network device.

Specifically, the access network device sends the first PDU set within first duration, and sends the second PDU set within second duration. In other words, for different PDU sets of a same service, the access network device may use different transmission duration.

Optionally, when the first duration is reached or the PDU set is successfully transmitted within the first duration, the access network device may stop transmission of the PDU set and/or discard the PDU set, to be specific, when the first duration is not reached and the PDU set is not successfully transmitted, the access network device continuously transmits the PDU set; and/or when the second duration is reached or the PDU set is successfully transmitted within the second duration, the access network device may stop transmission of the PDU set and/or discard the PDU set, to be specific, when the second duration is not reached and the PDU set is not successfully transmitted, the access network device continuously transmits the PDU set.

The VR service is used as an example. The access network device may send the media unit such as the video frame or the slice of the VR service to a VR terminal such as VR glasses or a VR helmet. For example, when the video frame or the slice is a first video frame or a slice (for example, an I frame), the access network device sends the video frame or the slice within the first duration; and/or when the video frame or the slice is a second video frame or a slice (for example, a P frame), the access network device sends the video frame or the slice within the second duration. Other XRM or real-time media services, such as the AR service, the MR service, or the cloud game, are similar to the VR service, and details are not described again.

Based on the method 200, the access network device may transmit different PDU sets of a same service by using different transmission duration. For example, for a key PDU set (for example, an I frame of a media service), the access network device may use long transmission duration; and for a non-key PDU set (for example, a P frame of the media service), the access network device may use short transmission duration. For another example, for a PDU set that affects a large quantity of PDU sets, the access network device may use long transmission duration; and for a PDU set that affects a small quantity of PDU sets, the access network device may use short transmission duration. That the access network device transmits the PDU set by using specific transmission duration may be understood as that the access network device transmits the PDU set within a time range specified by the transmission duration. This helps ensure transmission of the PDU set, further helps improve service experience of a user, and helps improve network resource utilization.

The following describes the first duration and/or the second duration.

The first duration and/or the second duration may be transmission delay budgets/a transmission delay budget from a time point at which the UPF receives the PDU set to a time point at which the PDU set is sent to the terminal, namely, transmission delay budgets/a transmission delay budget between the UPF and the terminal. In this case, the first duration and/or the second duration include/includes transmission delay budgets/a transmission delay budget in a core network and transmission delay budgets/a transmission delay budget in an access network. Generally, the transmission delay budget in the core network is fixed. Alternatively, the first duration and/or the second duration may be transmission delay budgets/a transmission delay budget in the access network, namely, transmission delay budgets/a transmission delay budget between the access network device and the terminal. Regardless of which transmission delay budgets/transmission delay budget of the first duration and/or the second duration are/is, the access network device may obtain the transmission delay budget between the access network device and the terminal.

In an example, the first duration and/or the second duration may be PDU set discard time (PDU set discard time, PSDT). The PSDT may be newly introduced QoS parameters used to represent the transmission delay budget, and the transmission delay budget may also be described as the PDU set discard time. The PSDT means that in a transmission process of the PDU set, if the PDU set is not successfully transmitted when a PSDB corresponding to a service to which the PDU set belongs is exceeded, the PDU set may continue to be transmitted until the PDU set is successfully transmitted or the PSDT is reached. The PSDT may be the transmission delay budget between the UPF and the terminal, or may be the transmission delay budget between the access network device and the terminal.

"The PSDB corresponding to the service to which the PDU set belongs" may also be described as "a PSDB corresponding to a QoS flow in which the PDU set is located". The PSDBs are collectively described as "the PSDB corresponding to the service to which the PDU set belongs" below.

In another example, the first duration and/or the second duration may be extended PDU set delay budgets/an extended PDU set delay budget (extended PDU set delay budget, extended PSDB). The extended PSDB may be newly introduced QoS parameters used to represent a transmission delay budget, and the transmission delay budget may also be described as longest transmission duration of the PDU set. The extended PSDB means that in the transmission process of the PDU set, if the PDU set is not successfully transmitted when the PSDB corresponding to the service to which the PDU set belongs is exceeded, the PDU set may continue to be transmitted until the PDU set is successfully transmitted or the extended PSDB is reached; or in the transmission process of the PDU set, after the PDU set is successfully transmitted or the extended PSDB is reached, transmission of the PDU set is stopped or the PDU set is discarded. The extended PSDB may be the transmission delay budget between the UPF and the terminal, or may be the transmission delay budget between the access network device and the terminal.

In still another example, the first duration and/or the second duration may be PSDBs/a PSDB, and the first duration and the second duration are PSDBs with different values.

Configuration parameters corresponding to the first duration and the second duration may be the same or may be different. For example, that the configuration parameters corresponding to the first duration and the second duration may be the same may be as follows: Both the first duration and the second duration may be the PSDT. In this case, it may be understood that, a value of the PSDT of the first PDU set and a value of the PSDT of the second PDU set are different. Alternatively, both the first duration and the second duration may be the extended PSDBs. In this case, it may be understood that, a value of the extended PSDB of the first PDU set and a value of the extended PSDB of the second PDU set are different. For another example, that the configuration parameters corresponding to the first duration and the second duration are different may be as follows: The first duration is the PSDT, and the second duration is the PSDB or the extended PSDB. In this case, it may be understood that, the first PDU set is transmitted based on the PSDT, and the second PDU set is transmitted based on the PSDB or the extended PSDB.

### 1. Start moment of the first duration and/or start moment of the second duration

In some implementations, the start moment of the first duration is an end moment of a PSDB corresponding to the service to which the first PDU set belongs; and/or the start moment of the second duration may be an end moment of a PSDB corresponding to the service to which the second PDU set belongs. That is, the first duration and/or the second duration are/is duration after the PSDB corresponding to the service to which the first PDU set belongs/duration after the PSDB corresponding to the service to which the second PDU set belongs. It may be understood that, after the PSDB corresponding to the service to which the first PDU set belongs and the PSDB corresponding to the service to which the second PDU set belongs are exceeded, the access network device may continue to transmit the first PDU set and/or the second PDU set.

In some other implementations, the start moment of the first duration may be a moment at which the core network (for example, the UPF) or the access network device receives the first PDU set; and/or the start moment of the second duration may be a moment at which the core network (for example, the UPF) or the access network device receives the second PDU set. Optionally, the first duration and/or the second duration are/is greater than or equal to the PSDB corresponding to the service to which the first PDU set belongs and the PSDB corresponding to the service to which the second PDU set belongs. It may be understood that, the access network device may transmit the first PDU set and/or the second PDU set within duration greater than duration of the PSDB corresponding to the service to which the first PDU set belongs and the PSDB corresponding to the service to which the second PDU set belongs.

Certainly, the start moment of the first duration and/or the start moment of the second duration may alternatively be other moments/another moment. This is not limited.

### 2. Manner of determining the first duration and/or manner of determining the second duration

The following uses the manner of determining the first duration as an example for description.

It should be noted that, the manner of determining the first duration is similar to the manner of determining the second duration. For the manner of determining the second duration, refer to the manner of determining the first duration. The manner of determining the second duration is not described in detail in this specification.
(1) In some implementations, after receiving the first PDU set, the access network device may determine the first duration, and then send the first PDU set to the terminal based on the determined first duration, to send the first PDU set to the terminal within the first duration. Similarly, after receiving the second PDU set, the access network device may determine the second duration, and then send the second PDU set to the terminal based on the determined second duration, to send the second PDU set to the terminal within the second duration.

In this application, there are many manners in which the access network device determines the first duration and/or the second duration. This is not limited. Details are as follows.

Manner 1: The access network device determines that a type of the first PDU set is a first type, and further determines the first duration based on a correspondence between the first type and the first duration; and/or the access network device determines that a type of the second PDU set is a second type, and further determines the second duration based on a correspondence between the second type and the second duration.

In other words, when the access network device receives a PDU set of the first type, the access network device sends the PDU set within the first duration; and when the access network device receives a PDU set of the second type, the access network device sends the PDU set within the second duration.

In other words, different PDU sets may be distinguished based on types, that is, different PDU sets are PDU sets of different types.

The first type and the second type are not specifically limited in embodiments of this application.

For example, the first type may be an independent encoding type, and the second type may be a type (also referred to as a non-independent encoding type) of a PDU set that is encoded depending on another PDU set.

For another example, the first type may be an independent encoding type, and the second type may be a type of a PDU set that is encoded depending on one PDU set or some PDU sets and on which another PDU set or some other PDU sets depend.

For another example, the first type may be an independent encoding type, and the second type may be a type of a PDU set that is encoded depending on another PDU set but on which the another PDU set does not depend.

The PDU set of the independent encoding type does not depend on the another PDU set during encoding. In addition, for the PDU set of the independent encoding type, a dependency relationship between PDU sets is terminated. To be specific, the PDU set of the independent encoding type and a PDU set that follows the PDU set of the independent encoding type do not depend on a PDU set preceding the PDU set of the independent encoding type. For example, the PDU set of the independent encoding type may correspond to an instantaneous decoder refresh (instantaneous decoder refresh, IDR) frame in encoding.

It should be noted that, "dependency" herein may also be replaced with "reference", "association", or the like.

It should be further noted that, a PDU set #1 and a PDU set #2 are used as an example. Dependency in this application may be as follows: During encoding, the PDU set #2 needs to depend on the PDU set #1. For example, if the PDU set #1 is an I frame, and the PDU set #2 is a P frame, the PDU set #2 depends on the PDU set #1. For another example, if the PDU set #2 is an enhancement layer, and the PDU set #1 is a basic layer, the PDU set #2 depends on the PDU set #1. The dependency in this application may alternatively be dependency on service use or display. For example, the PDU set #1 corresponds to a video stream, and the PDU set #2 is an audio or a touch sense. If video transmission fails, audio experience and touch sense experience are also incomplete. Therefore, it is considered that the PDU set #2 depends on the PDU set #1. For the dependency on the service use or the display, a PDU set corresponding to any data flow may be the PDU set #1, and a PDU set corresponding to another data flow is the PDU set #2. When any data flow is not successfully transmitted, transmission of another data flow also causes incomplete experience. Therefore, it may be considered that PDU sets corresponding to data flows that use a same service depend on each other. The service in this application may be the media service (for example, the VR service, the AR service, the MR service, or the cloud game service), a perception service (for example, a touch sense), or the like.

The following uses the first duration as an example for description. For the manner of determining the second duration, refer to the manner of determining the first duration. The manner of determining the second duration is not described in detail in this specification.

The VR service is used as an example. The correspondence between the first type and the first duration may be a correspondence between a media frame of the first type and transmission duration of the media frame of the first type of the VR service, or the correspondence between the first type and the first duration may be a correspondence between a slice of the first type and transmission duration of the slice of the first type of the VR service. Other XRM or real-time media services, such as the AR service, the MR service, or the cloud game, are similar to the VR service, and details are not described again.

There are many implementations in which the access network device determines that the type of the first PDU set is the first type. Details are as follows.

In a possible implementation, the first PDU set carries a type identifier, and the access network device determines, based on the type identifier carried in the first PDU set, that the type of the PDU set is the first type.

Optionally, the type identifier may be carried in a GPRS tunneling protocol for the user plane (GPRS tunneling protocol for the user plane, GTP-U) header (also referred to as a packet header or a header) of the PDU set. A GPRS is short for a general packet radio service (general packet radio service).

In this implementation, the type identifier carried in the first PDU set may be added by the UPF to the first PDU set.

Specifically, the method 200 may further include step 203 to step 205, and step 203 to step 205 are as follows.

Step 203: The UPF receives the first PDU set.

For example, the UPF receives the first PDU set from the AS.

The VR service is used as an example. The UPF may receive the media unit such as the video frame or the slice of the VR service from the application server of the VR service. The video frame or the slice herein may be referred to as the PDU set. Other XRM or real-time media services, such as the AR service, the MR service, or the cloud game, are similar to the VR service, and details are not described again.

Step 204: The UPF determines that the type of the first PDU set is the first type.

An implementation of step 204 is not specifically limited in this application.

In an example, the UPF may determine, based on at least one of group of pictures (group of pictures, GOP) information, a size of the first PDU set, an encoding feature of the first PDU set, information carried in a data packet of the first PDU set (for example, a field in a real-time transport protocol (real-time transport protocol, RTP)/secure real-time transport protocol (secure real-time transport protocol, SRTP) header), or a traffic feature of a service flow corresponding to the first PDU set, that the type of the first PDU set is the first type.

The GOP information is used as an example. The GOP information indicates fixed type information between consecutive PDU sets. To be specific, the UPF may determine, based on the GOP information, a PDU set type corresponding to each PDU set in a group of PDU sets. The VR service is used as an example. It is assumed that the GOP information is a quantity of media frames included in each GOP, a 1^{st} media frame in each GOP is an I frame, remaining media frames are P frames, and the first PDU set is the I frame. In this way, when a 1^{st} media frame in a GOP is received, the UPF determines that the media frame is the I frame. Other XRM or real-time media services, such as the AR service, the MR service, or the cloud game, are similar to the VR service, and details are not described again.

Information carried in a data packet of the first PDU set is used as an example. After receiving the first PDU set, the UPF may determine that currently, a plurality of data packets belong to one PDU set and determine a type of the PDU set based on a field in an RTP/SRTP layer header or an extension header of each data packet in the first PDU set. The VR service is used as an example. The UPF may determine that a plurality of data packets belong to one media frame or one slice, and determine a type of the media frame or the slice based on a field in an RTP/SRTP layer header or an extension header of a data packet. Other XRM or real-time media services, such as the AR service, the MR service, or the cloud game, are similar to the VR service, and details are not described again.

A traffic feature of a service flow corresponding to the first PDU set is used as an example. The UPF can determine, based on the traffic feature of the service flow, that the type of the first PDU set is the first type. The VR service is used as an example. It is assumed that the first type is the independent encoding type, the UPF determines, based on a periodicity feature of data packet transmission of the VR service, that a group of data packets that periodically arrive at the UPF is one media frame (namely, the first PDU set). Because a size of a media frame of an independent decoding type is usually several times a size of a media frame of another type, the UPF may determine, based on a data volume or a quantity of data packets of each group of data packets, whether the media frame is a media frame of the independent encoding type. For example, when a data volume of a data packet or a quantity of data packets of the first PDU set is large, the access network device may determine that the type of the first PDU set is the independent encoding type. Other XRM or real-time media services, such as the AR service, the MR service, or the cloud game, are similar to the VR service, and details are not described again.

Step 205: The UPF adds the type identifier of the first type to the first PDU set based on the first type determined in step 204.

The VR service is used as an example. The PDU set is the media frame or the slice, and the UPF may add corresponding type identifiers to media frames or slices of different types of the VR service. Assuming that the PDU set of the first type is the I frame, and the UPF determines that the current PDU set is the I frame, the UPF may mark the current media frame as the I frame. Other XRM or real-time media services, such as the AR service, the MR service, or the cloud game, are similar to the VR service, and details are not described again.

Optionally, the UPF may add the type identifier to a GTP-U header of the first PDU set.

It should be noted that, the UPF may add the type identifier only to a PDU set of a specific type, or may add a type identifier to each PDU set. For example, it is assumed that the PDU set is a media frame of the XRM or the real-time media service (such as the VR service, the AR service, the MR service, or the cloud game), and the media frame includes the I frame and the P frame. The UPF may add a type identifier only to the I frame, or may add a type identifier to each media frame. In addition, the UPF may add the type identifier to all data packets in the PDU set, or may add the type identifier to some data packets. This is not limited herein.

In another possible implementation, the access network device may determine, based on at least one of GOP information, a size of the PDU set, an encoding feature of the PDU set, information (for example, a field in an RTP/SRTP protocol header) carried in the data packet of the PDU set, or a traffic feature of a service flow corresponding to the PDU set, that the type of the first PDU set is the first type. A specific implementation is the same as a manner in which the UPF determines, based on the foregoing information, that the type of the first PDU set is the first type. For details, refer to descriptions on a UPF side. Details are not described herein again.

Optionally, the correspondence between the first type and the first duration may be preconfigured in the access network device.

Optionally, the access network device may receive the correspondence between the first type and the first duration from a core network device. For example, an SMF may include a correspondence between different PDU set types and duration in QoS parameters, and send the QoS parameters to the access network device. The correspondence includes the correspondence between the first type and the first duration.

In addition, the correspondence between the different PDU set types and the duration in the SMF may be preconfigured, or may be obtained from a PCF. For example, the PCF includes the correspondence between the different PDU set types and the duration in a PCC rule sent to the SMF. Similarly, the correspondence between the different PDU set types and the duration in the PCF may be preconfigured, or may be obtained from an AF.

Optionally, the SMF may further send scheduling policy information to the access network device. Correspondingly, the access network device may receive the scheduling policy information from the SMF. The scheduling policy information indicates the access network device to send the PDU set based on the duration corresponding to the type of the PDU set.

Manner 2: The access network device obtains, based on a first QFI corresponding to the first PDU set, the first duration from a first QoS parameter of a first QoS flow corresponding to the first QFI.

The first QoS flow is used for transmission of a PDU set of a first type. In other words, PDU sets of different types may be transmitted through different QoS flows.

Optionally, the first QFI corresponding to the first PDU set may be a QFI carried in the first PDU set.

In Manner 2, an SMF may provide QoS parameters corresponding to a plurality of QoS flows for the access network device, and the plurality of QoS flows are used for transmission of a plurality of different types of PDU sets. The QoS parameters of each QoS flow include duration for transmitting the PDU set. The different types include the first type. In this way, when receiving the first PDU set from the first QoS flow used to transmit the PDU set of the first type, the access network device may send the first PDU set to the terminal by using the first duration corresponding to the first QoS flow, to transmit the first PDU set within the first duration.

The VR service is used as an example. It is assumed that media frames of the VR service are classified into an I frame (where it is assumed that the I frame corresponds to a first type) and a P frame (where it is assumed that the P frame corresponds to a second type). The VR service may be transmitted through the first QoS flow and a second QoS flow. The first QoS flow is used for transmission of the I frame, and the second QoS flow is used for transmission of the P frame. In this way, the SMF may separately provide, for the access network device, the first QoS parameter corresponding to the first QoS flow and a second QoS parameter corresponding to the second QoS flow, the first QoS parameter includes the first duration, and the second QoS parameter includes the second duration. Other XRM or real-time media services, such as the AR service, the MR service, or the cloud game, are similar to the VR service, and details are not described again.

For the UPF, after receiving the first PDU set, the UPF may determine that a type of the first PDU set is the first type, and further map the first PDU set to the first QoS flow used to transmit the PDU set of the first type, and transmit the first QoS flow to the access network device, so that the access network device may obtain the first duration based on the first QFI of the first PDU set.

Optionally, the SMF may further send scheduling policy information to the access network device. Correspondingly, the access network device may receive the scheduling policy information from the SMF. The scheduling policy information indicates the access network device to send the PDU set based on the duration corresponding to the type of the PDU set.

Manner 3: The first PDU set carries the first duration, and the access network device may obtain the first duration from the first PDU set.

Optionally, the first duration may be carried in a GTP-U header of the first PDU set. In Manner 3, the first duration carried in the first PDU set may be added by the UPF to the first PDU set.

Specifically, the method 200 may further include step 203 and step 206, and step 203 and step 206 are as follows.

Step 203: The UPF receives the first PDU set.

For example, the UPF receives the first PDU set from the AS.

The VR service is used as an example. The UPF may receive the media unit such as the video frame or the slice of the VR service from the application server of the VR service, and the first PDU set is the media frame or the slice of the VR service. Other XRM or real-time media services, such as the AR service, the MR service, or the cloud game, are similar to the VR service, and details are not described again.

Step 206: The UPF adds the first duration to the first PDU set based on a quantity of PDU sets that depend on the first PDU set, so that the access network device may perform transmission based on the first duration carried in the first PDU set.

The VR service is used as an example. The UPF may add different duration to different media frames or slices of the VR service, and the media frames or slices may be referred to as PDU sets. Assuming that the first PDU set is the I frame, and the UPF determines that the current media frame is the I frame, the UPF may determine the first duration based on a quantity of media frames that depend on the I frame, and add the first duration to the I frame. Other XRM or real-time media services, such as the AR service, the MR service, or the cloud game, are similar to the VR service, and details are not described again.

Optionally, the UPF may add the first duration to the GTP-U header of the first PDU set. For example, the first duration may be placed in a GTP-U header of a data packet in the first PDU set. In addition, the UPF may add the first duration to all data packets in the first PDU set, or may add the first duration to some data packets. This is not limited herein.

The UPF may determine, based on a dependency relationship between different PDU sets, the quantity of PDU sets that depend on the first PDU set.

The following describes the dependency relationship between the different PDU sets by using an example.

For example, for a PDU set 1 to a PDU set 3, the PDU set 1 is independently encoded, the PDU set 2 is encoded with reference to the PDU set 1, and the PDU set 3 is encoded with reference to the PDU set 1 and the PDU set 2. It may be understood that, the PDU set 1 is of the independent encoding type, the PDU set 2 depends on another PDU set, that is, the PDU set 2 and the PDU set 3 depend on the PDU set 1, the PDU set 3 depends on the PDU set 2, and no other PDU set depends on the PDU set 3. In this way, a quantity of PDU sets that depend on the PDU set 1 is 2, a quantity of PDU sets that depend on the PDU set 2 is 1, and a quantity of PDU sets that depend on the PDU set 3 is 0.

The "dependency relationship" herein may also be replaced with an "association relationship", a "reference relationship", an "inter-frame relationship", an "inter-frame reference relationship", or the like.

Optionally, the dependency relationship between the different PDU sets may be preconfigured in the UPF.

Optionally, the dependency relationship between the different PDU sets may be obtained by the UPF from an SMF.

In addition, the dependency relationship between the different PDU sets in the SMF may be preconfigured, or may be obtained from a PCF. For example, the PCF includes the dependency relationship between the different PDU sets in a PCC rule sent to the SMF. Similarly, the dependency relationship between the different PDU sets in the PCF may be preconfigured, or may be obtained from an AF.

It should be noted that, the UPF may add duration only to a PDU set of a specific type, and for example, the UPF may transmit, based on a PSDB by default, a PDU set to which no duration is added. The UPF may alternatively add duration to each PDU set. When the UPF adds the duration to the PDU set of the specific type, the duration may be only the transmission delay budget between the terminal and the access network device, or may be the transmission delay budget between the UPF and the terminal. This is not limited herein.

Optionally, the SMF may further send scheduling policy information to the access network device. Correspondingly, the access network device may receive the scheduling policy information from the SMF. The scheduling policy information indicates the access network device to send the PDU set based on the duration carried in the PDU set.

It should be noted that, in some other implementations, the first duration may not be carried in the first PDU set, but is sent to the access network device in parallel with the first PDU set. For example, the UPF may send the first duration and the first PDU set to the access network device in parallel, and the access network device may transmit the first PDU set based on the first duration sent in parallel with the first PDU set.

Manner 4: The access network device determines the first duration based on a quantity of PDU sets that depend on the first PDU set.

The access network device may determine, based on a dependency relationship between different PDU sets, the quantity of PDU sets that depend on the first PDU set. For descriptions of the dependency relationship between the different PDU sets, refer to Manner 3. Details are not described herein again.

Optionally, the dependency relationship between the different PDU sets may be preconfigured in the access network device.

Optionally, the dependency relationship between the different PDU sets may be obtained by the access network device from an SMF.

In addition, the dependency relationship between the different PDU sets in the SMF may be preconfigured, or may be obtained from a PCF. For example, the PCF includes the dependency relationship between the different PDU sets in a PCC rule sent to the SMF. Similarly, the dependency relationship between the different PDU sets in the PCF may be preconfigured, or may be obtained from an AF.

Optionally, the SMF may further send scheduling policy information to the access network device. Correspondingly, the access network device may receive the scheduling policy information from the SMF. The scheduling policy information indicates the access network device to perform dynamic scheduling on the PDU set.

(2) In some other implementations, the first duration and/or the second duration are/is dynamically determined.

The first duration and/or the second duration are/is dynamically determined. It may be understood that, the access network device does not schedule the first PDU set and/or the second PDU set based on determined duration, but keeps transmission of the first PDU set and/or the second PDU set until a condition for stopping transmission of the first PDU set and/or the second PDU set is met, so that the first PDU set is transmitted within the first duration, and the second PDU set is transmitted within the second duration.

Manner 5: The access network device keeps sending of the first PDU set to the terminal until a next PDU set (or a 1^{st} PDU set that follows the first PDU set) that carries an independent encoding type identifier is received. It may be understood that, a condition for the access network device to stop transmission of the first PDU set is that the next PDU set that carries the independent encoding type is received.

In other words, an end moment of the first duration is a moment at which the access network device receives a next PDU set (or a 1^{st} PDU set that follows the PDU set) that carries the independent encoding type identifier.

In this implementation, the independent encoding type identifier carried in the PDU set may be added by the UPF to the PDU set. That is, after receiving the PDU set, the UPF may detect and mark a PDU set of the independent encoding type.

Manner 6: The access network device keeps sending of the first PDU set to the terminal until a third PDU set is received, where the third PDU set is a 1^{st} PDU set that follows the first PDU set and that has no dependency relationship with the first PDU set. It may be understood that, a condition for the access network device to stop transmission of the first PDU set is that the third PDU set is received.

In other words, an end moment of the first duration is a moment at which the access network device receives the third PDU set.

In a possible implementation, the UPF may add, to each PDU set, a sequence number (sequence number, SN) of a PDU set on which the PDU set depends. For example, it is assumed that a PDU set #2 is a 1^{st} PDU set that follows a PDU set #1 and that has no dependency relationship with the PDU set #1. After receiving the PDU set #2, the UPF adds, to the PDU set #2, a sequence number of a PDU set on which the PDU set #2 depends. Because the PDU set #2 does not depend on the PDU set #1, the sequence number of the PDU set on which the PDU set #2 depends does not include a sequence number of the PDU set #1, after receiving the PDU set #2, the access network device may stop transmission of the PDU set #1.

It should be noted that, for the PDU set of the independent encoding type, the UPF may not add the foregoing sequence number to the PDU set of the independent encoding type, or may add a special sequence number or special information to the PDU set of the independent encoding type, to indicate that the PDU set does not depend on another PDU set.

Optionally, an SMF may further send scheduling policy information to the access network device. Correspondingly, the access network device may receive the scheduling policy information from the SMF. The scheduling policy information indicates the access network device to perform dynamic scheduling on the PDU set.

Manner 7: The access network device keeps sending of the first PDU set to the terminal until a next PDU set that carries an independent encoding type identifier is received and/or first preset duration is reached. It may be understood that, a condition for the access network device to stop transmission of the first PDU set is that the next PDU set that carries the independent encoding type identifier is received and/or the first preset duration is reached.

In other words, an end moment of the first duration is an earlier one of an end moment of the first preset duration and a moment at which the access network device receives the next PDU set that carries the independent encoding type identifier.

Optionally, the first preset duration may be expected longest duration for transmitting the first PDU set.

Optionally, the first preset duration may be preconfigured in the access network device.

Optionally, the first preset duration may be obtained by the access network device from an SMF.

In addition, the first preset duration in the SMF may be preconfigured, or may be obtained from a PCF. For example, the PCF includes the first preset duration in a PCC rule sent to the SMF. Similarly, the first preset duration in the PCF may be preconfigured, or may be obtained from the AF.

That is, when dynamic scheduling is performed on the PDU set, expected longest duration may be set, to avoid a waste of resources caused by excessively long transmission duration of the PDU set.

Optionally, the SMF may further send scheduling policy information to the access network device. Correspondingly, the access network device may receive the scheduling policy information from the SMF. The scheduling policy information indicates the access network device to perform dynamic scheduling on the PDU set.

Manner 8: The access network device keeps sending of the first PDU set to the terminal until a third PDU set is received or first preset duration is reached, where the third PDU set is a 1^{st} PDU set that follows the PDU set and that has no dependency relationship with the PDU set. It may be understood that, a condition for the access network device to stop transmission of the first PDU set is that the third PDU set is received and/or the first preset duration is reached.

In other words, an end moment of the first duration is an earlier one of an end moment of the first preset duration and a moment at which the access network device receives the third PDU set.

Optionally, the first preset duration may be expected longest duration for transmitting the first PDU set.

Optionally, the first preset duration may be preconfigured in the access network device.

Optionally, the first preset duration may be obtained by the access network device from an SMF.

In addition, the first preset duration in the SMF may be preconfigured, or may be obtained from a PCF. For example, the PCF includes the first preset duration in a PCC rule sent to the SMF. Similarly, the first preset duration in the PCF may be preconfigured, or may be obtained from the AF.

That is, when dynamic scheduling is performed on the PDU set, expected longest duration may be set, to avoid a waste of resources caused by excessively long transmission duration of the PDU set.

Optionally, the SMF may further send scheduling policy information to the access network device. Correspondingly, the access network device may receive the scheduling policy information from the SMF. The scheduling policy information indicates the access network device to perform dynamic scheduling on the PDU set.

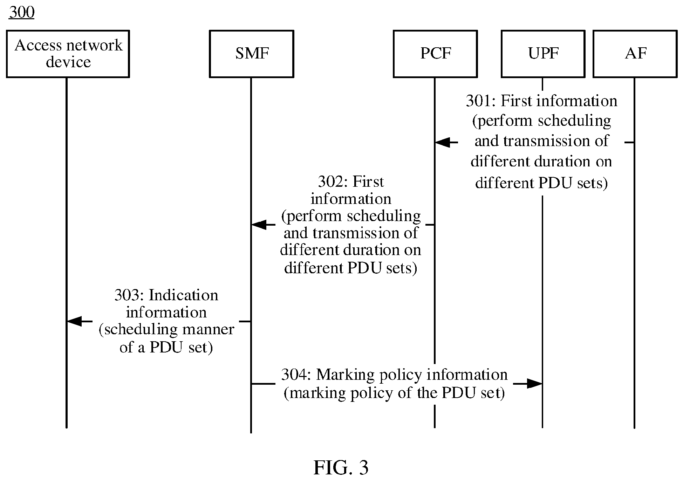

The foregoing focuses on describing transmission of the PDU set with reference to FIG. 2. The following describes signaling exchange on a control plane in embodiments of this application with reference to FIG. 3. Through the signaling exchange on the control plane shown in FIG. 3, configuration in the access network device and the UPF may be implemented, so that the access network device and the UPF may perform the method 200 shown in FIG. 2.

FIG. 3 is a schematic flowchart of signaling exchange on a control plane according to an embodiment of this application.

The method 300 includes at least a part of the following content.

Step 301: A PCF obtains first information.

The first information indicates to perform scheduling and transmission of different duration on different PDU sets.

Optionally, the first information may include at least one of the following information: a correspondence between different PDU set types and duration, a dependency relationship between different PDU sets, preset duration, a plurality of QoS parameters, or indication information. A plurality of QoS flows corresponding to the plurality of QoS parameters are used for transmission of a plurality of different types of PDU sets, and each of the plurality of QoS parameters includes duration for transmitting a PDU set. The indication information indicates to perform scheduling and transmission of different duration on the PDU sets of the different types. There may be preset duration of one or more lengths. Optionally, when there is preset duration of a plurality of lengths, the preset duration of the plurality of lengths may correspond to different PDU sets (or the PDU sets of the different types).

For example, a VR service is used as an example. The correspondence between the different PDU set types and the duration may be a correspondence between media frames of different types and transmission duration of the media frames of the different types of the VR service or a correspondence between slices of different types and transmission duration of the slices of the different types of the VR service. The dependency relationship between the different PDU sets may be an encoding dependency relationship between different media frames of the VR service or an encoding dependency relationship between different slices of the VR service. The preset duration may be expected longest duration that is for transmitting a media frame or a slice and that is determined by an application server of the VR service. The plurality of QoS parameters may be the QoS parameters of the plurality of QoS flows used to transmit media frames or slices of a plurality of types of the VR service. The QoS parameters may include transmission duration of media frames or slices of corresponding types. The indication information may indicate to perform scheduling and transmission of different duration on different media frames or slices of the VR service. Other XRM or real-time media services, such as an AR service, an MR service, or a cloud game, are similar to the VR service, and details are not described again.

In a possible implementation, as shown in FIG. 3, step 301 includes: The PCF receives first information from an AF, and correspondingly, the AF sends the first information to the PCF.

In an example, the AF may send the first information to the PCF by using an application function request message (AF request).

The VR service is used as an example. The application server of the VR service may send the application function request message to the PCF through the AF, where the message carries the first information. Other XRM or real-time media services, such as the AR service, the MR service, or the cloud game, are similar to the VR service, and details are not described again.

In another possible implementation, step 301 includes: The PCF generates the first information.

Information required for the PCF to generate the first information, for example, the correspondence between the different PDU set types and the duration, the dependency relationship between the different PDU sets, or the preset duration may be preconfigured in the PCF, or may be provided by the AF.

When the AF provides, for the PCF, the information required for generating the first information, the method 300 further includes: The AF sends the application function request message to the PCF, and correspondingly, the PCF receives the application function request message from the AF. The application function request message includes at least one of the following information: the correspondence between the different PDU set types and the duration, the dependency relationship between the different PDU sets, the preset duration, or the indication information. Step 301 specifically includes: The PCF generates the first information based on the application function request message.

Step 302: The PCF sends the first information to an SMF.

Correspondingly, the SMF receives the first information from the PCF.

Optionally, the first information may be carried in a policy and charging control (policy and charging control, PCC) rule. For detailed descriptions of the first information, refer to the foregoing descriptions.

Step 303: The SMF sends scheduling policy information to an access network device based on the first information.

Correspondingly, the access network device receives the scheduling policy information from the SMF.

The scheduling policy information indicates a scheduling manner of a PDU set. The scheduling manner of the PDU set includes at least one of the following: transmitting the PDU set based on duration corresponding to a type of the PDU set, transmitting the PDU set based on duration carried in the PDU set, or performing dynamic scheduling on the PDU set.

The VR service is used as an example. The scheduling policy information indicates a scheduling manner of the media frame or the slice of the VR service. The scheduling manner of the media frame or the slice includes at least one of the following: transmitting the media frame or the slice based on duration corresponding to a type of the media frame or the slice, transmitting the media frame or the slice based on duration carried in the media frame or the slice, or performing dynamic scheduling on the media frame or the slice. Other XRM or real-time media services, such as the AR service, the MR service, or the cloud game, are similar to the VR service, and details are not described again.

Step 304: The SMF sends marking policy information to a UPF based on the first information.

Correspondingly, the UPF receives the marking policy information from the SMF.

The marking policy information indicates a marking policy of the PDU set. The marking policy of the PDU set includes at least one of the following: adding a type identifier to the PDU set, adding a QFI corresponding to the type of the PDU set to the PDU set, adding a sequence number of a PDU set on which the PDU set depends to the PDU set, or adding transmission duration to the PDU set.

The VR service is used as an example. The marking policy information indicates a scheduling manner of the media frame or the slice of the VR service. The marking policy of the media frame or the slice includes at least one of the following: adding a type identifier to the media frame or the slice, adding a QFI corresponding to the type of the media frame or the slice to the media frame or the slice, adding a sequence number of the media frame or the slice on which the media frame or the slice depends to the media frame or the slice, or adding transmission duration to the media frame or the slice. Other XRM or real-time media services, such as the AR service, the MR service, or the cloud game, are similar to the VR service, and details are not described again.

Optionally, the marking policy of the PDU set corresponds to the scheduling manner of the PDU set.

For example, when the marking policy of the PDU set is adding the type identifier to the PDU set or adding the QFI corresponding to the type of the PDU set to the PDU set, the scheduling manner of the PDU set is transmitting the PDU set based on the duration corresponding to the type of the PDU set.

For another example, when the marking policy of the PDU set is adding the type identifier to the PDU set or adding the sequence number of the PDU set on which the PDU set depends to the PDU set, the scheduling manner of the PDU set is performing dynamic scheduling on the PDU set.

For another example, when the marking policy of the PDU set is adding the transmission duration to the PDU set, the scheduling manner of the PDU set is transmitting the PDU set based on the duration carried in the PDU set.

Optionally, the method 300 further includes: The SMF sends at least one of the following information to the access network device based on the scheduling manner of the PDU set: the correspondence between the different PDU set types and the duration, the dependency relationship between the different PDU sets, the preset duration, or the plurality of QoS parameters.

Optionally, the method 300 further includes: The SMF sends at least one of the following information to the UPF based on the marking policy of the PDU set: the correspondence between the different PDU set types and the duration or the dependency relationship between the different PDU sets.

The following describes the technical solutions of this application in detail with reference to specific examples.

It should be noted that, a transmission delay budget of the PDU set in the following examples may be a time period from receiving the PDU set from the UPF to sending the PDU set to a terminal, namely, a transmission delay budget between the UPF and the terminal. In this case, the transmission delay budget of the PDU set includes a transmission delay budget in a core network and a transmission delay budget in an access network. Generally, the transmission delay budget in the core network is fixed. The transmission delay budget of the PDU set may alternatively be a transmission delay budget in an access network, namely, a transmission delay budget between the access network device and the terminal. This is not limited herein. Regardless of which transmission delay budget the transmission delay budget of the PDU set is, the access network device or the UPF may obtain the transmission delay budget between the access network device and the terminal. For ease of description, in the following examples, PSDT is used as an example for description.

### Example 1

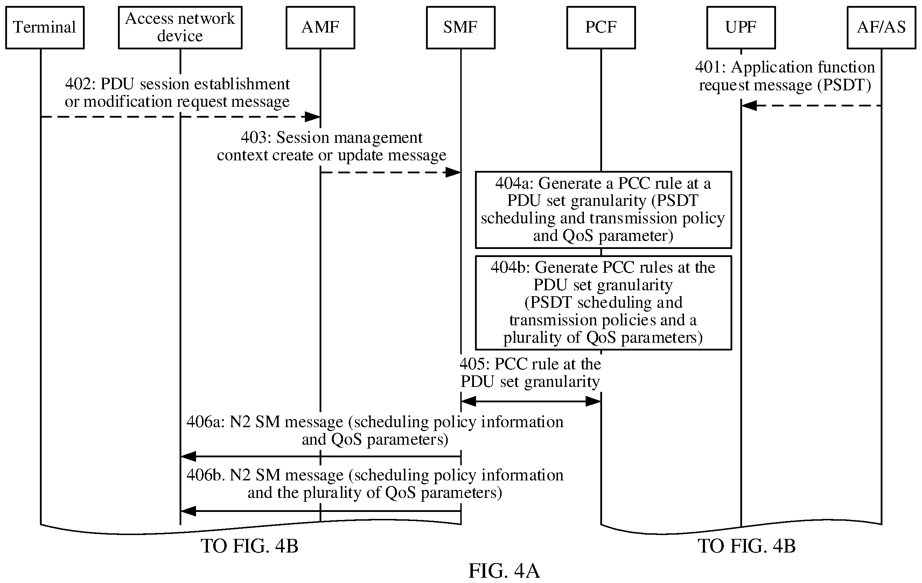

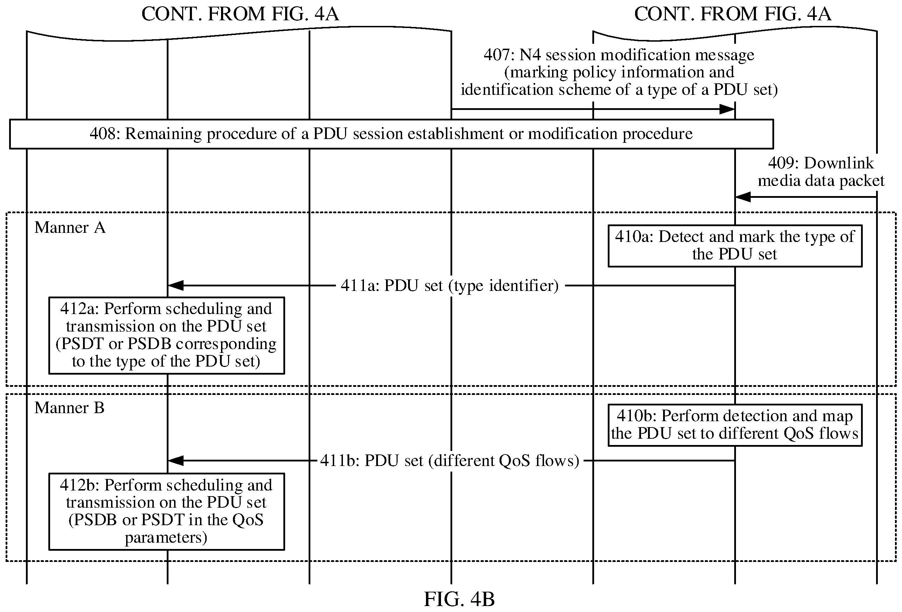

FIG. 4A and FIG. 4B show an example of a data transmission method in a communication system according to this application. FIG. 4A and FIG. 4B are a specific implementation of Manner 1 and Manner 2 in FIG. 2, and FIG. 3. For descriptions related to a service, refer to corresponding descriptions in FIG. 2 and FIG. 3.

In this example, different PSDT is configured for PDU sets of different types based on PSDT provided by an AF. In a transmission process of the PDU set, a UPF identifies a type of the PDU set, adds a corresponding identifier to the PDU set, and then sends the PDU set to an access network device. After receiving the PDU set, the access network device performs scheduling based on PSDT corresponding to the type of the PDU set, so that the PDU set is transmitted based on the PSDT.

Step 401: The AF sends an application function request message (AF request) to a PCF.

Correspondingly, the PCF receives the application function request message from the AF.

The application function request message includes PSDT of one or more lengths. The PSDT of one or more lengths corresponds to the type of the PDU set. For example, when the application function request message includes PSDT of one length, the PSDT corresponds to a specific PDU set type. For another example, when the application function request message includes PSDT of a plurality of lengths, the PSDT of the one or more lengths may correspond to different PDU set types.

In a possible implementation, the PSDT may be determined based on a threshold for triggering a receiving end (also referred to as a receiving end of a service) to send a retransmission request. After detecting that a PDU set of a specific type is not successfully received, the receiving end requests a transmitting end to resend the PDU set of the type. The threshold for triggering the receiving end to send the request is the threshold for the receiving end to send the retransmission request. For example, an end moment of the PSDT is not later than the threshold.

In another possible implementation, the PSDT may alternatively be an empirical value of an application layer.

Optionally, the application function request message further includes indication information, and the indication information indicates to perform scheduling and transmission based on the PSDT corresponding to the type of the PDU set, or configure the PSDT based on the type of the PDU set.

Optionally, the application function request message further includes flow description information and other QoS parameters at a PDU set granularity.

It should be noted that, if the AF is in a trusted domain (for example, the AF is an AF deployed by an operator), the AF may directly interact with the PCF. To be specific, the AF sends the PSDT of the one or more lengths, the indication information, the flow description information, or the other QoS parameters at the PDU set granularity to the PCF by invoking a service interface of the PCF, for example, an Npcf_PolicyAuthorization service interface. If the AF is in an untrusted domain (for example, the AF is a third-party AF), the AF interacts with the PCF through an NEF. To be specific, the AF sends the PSDT of the one or more lengths, the indication information, the flow description information, or the other QoS parameters at the PDU set granularity to the NEF by invoking a service interface of the NEF, for example, an Nnef_AFSessionWithQoS service interface. Then, the NEF sends the PSDT of the one or more lengths, the indication information, the flow description information, or the other QoS parameters at the PDU set granularity to the PCF by invoking a service interface of the PCF, for example, an Npcf_PolicyAuthorization service interface.

Step 401 is an optional step. For example, when PSDT of one or more lengths is preconfigured in the PCF, step 401 may not be performed.

Step 402: When a terminal initiates a PDU session establishment or modification procedure, the terminal sends a PDU session establishment request (PDU session establishment request) message or a PDU session modification request (PDU session modification request) message to an AMF.

Correspondingly, the AMF receives the PDU session establishment request message or the PDU session modification request message from the terminal.

Step 403: After receiving the PDU session establishment request message or the PDU session modification request message, the AMF sends a session management context create message (for example, Nsmf_PDUSession_CreateSMContext) or a session management context update message (for example, Nsmf_PDUSession_UpdateSMContext) to an SMF, where the PDU session establishment request message or the PDU session modification request message from the terminal is carried.

Step 402 and step 403 are optional steps.

Step 404a: The PCF generates a PCC rule based on information from the AF.

The PCC rule includes a PSDT scheduling and transmission policy at the PDU set granularity and the QoS parameters at the PDU set granularity. The PSDT scheduling and transmission policy includes: after transmission of the PDU set fails, keeping transmission of the PDU set within the PSDT time until the PDU set is successfully transmitted or the PSDT is reached. The QoS parameters include a correspondence between the type of the PDU set and the PSDT. For example, when there are a plurality of PDU set types, the QoS parameters may include PSDT respectively corresponding to the plurality of PDU set types.

Step 404b: The PCF generates PCC rules at the PDU set granularity based on the information from the AF.

A PCC rule includes a PSDT scheduling and transmission policy at the PDU set granularity and a QoS parameter at the PDU set granularity. The PSDT scheduling and transmission policy includes: after transmission of the PDU set fails, keeping transmission of the PDU set within the PSDT time until the PDU set is successfully transmitted or the PSDT is reached. In step 404b, the PCF establishes different QoS flows for the different PDU set types for transmission, and configures corresponding PSDT for the different QoS flows, for example, QoS 1 PSDT=PSDT 1 and QoS 2 PSDT=PSDT 2. In this way, when there are a plurality of PDU set types, the PCC rules may include the plurality of QoS parameters, and each QoS parameter includes PSDT corresponding to the type of the PDU set transmitted through the QoS flow.

Step 405: The PCF sends the PCC rule at the PDU set granularity to the SMF.

Correspondingly, the SMF receives the PCC rule at the PDU set granularity from the PCF.

In a possible implementation, if the terminal initiates the PDU session establishment or modification procedure, that is, performs step 402 and step 403, the SMF actively initiates a session management policy association establishment or modification procedure, to obtain the PCC rule at the PDU set granularity from a PCF side.

In another possible implementation, the PCF initiates a session management policy association modification procedure, and sends the PCC rule at the PDU set granularity to the SMF. In this case, step 402 and step 403 may not be performed.

Step 406a: The SMF sends an N2 session management (session management, SM) message (N2 SM message) to the access network device based on the PCC rule at the PDU set granularity provided by the PCF.

Correspondingly, the access network device receives the N2 SM message from the SMF.

Specifically, the SMF may send the N2 SM message to the access network device through the AMF.

The N2 SM message includes the scheduling policy information and the QoS parameters. The scheduling policy information indicates a scheduling manner in which the access network device schedules the PDU set. Specifically, the scheduling policy information indicates to perform scheduling and transmission based on PSDT corresponding to the PDU set, or indicates the access network device to perform scheduling and transmission based on different PSDT for the different PDU set types. The QoS parameters include the correspondence between the type of the PDU set and the PSDT. For example, when there are a plurality of PDU set types, the QoS parameters may include PSDT respectively corresponding to the plurality of PDU set types.

The scheduling policy information may be an indicator (indicator).

Optionally, the scheduling policy information further indicates the access network device to determine, based on a type identifier or a mark in a GTP-U header of the PDU set, the PSDT corresponding to the PDU set.

Step 406a corresponds to step 404a.

Step 406b: The SMF sends the N2 SM message to the access network device based on the PCC rule at the PDU set granularity that is provided by the PCF.

Correspondingly, the access network device receives the N2 SM message from the SMF.

Specifically, the SMF may send the N2 SM message to the access network device through the AMF.

The N2 SM message includes the scheduling policy information and the QoS parameters. The scheduling policy information indicates the scheduling manner in which the access network device schedules the PDU set. Specifically, the scheduling policy information indicates to perform scheduling and transmission based on the PSDT corresponding to the PDU set, or indicates the access network device to perform scheduling and transmission based on the different PSDT for the different PDU set types. When there are a plurality of PDU set types, the N2 SM message may include a plurality of QoS profiles (QoS profiles), and each QoS profile includes the PSDT corresponding to the type of the PDU set transmitted through the QoS flow.

Optionally, the scheduling policy information further indicates the access network device to determine, based on the type identifier or the mark in the GTP-U header of the PDU set, the PSDT corresponding to the PDU set.

Step 406b corresponds to step 404b.

The scheduling policy information may be an indicator (indicator).

Step 407: The SMF sends an N4 session modification (N4 session modification) message to the UPF based on the PCC rule at the PDU set granularity that is provided by the PCF.

Correspondingly, the UPF receives the N4 session modification message from the SMF.

The N4 session modification message includes an N4 rule. The N4 rule includes marking policy information and an identification scheme of the type of the PDU set. The marking policy information indicates the marking policy of the PDU set, and the marking policy is adding the type identifier to the PDU set or adding the QFI corresponding to the type of the PDU set to the PDU set.

Step 408: Perform a remaining procedure of the PDU session establishment or modification procedure.

For a specific procedure, refer to the related technology, for example, section 4.3.2.1 in TS 23.502. Details are not described herein.

After step 401 to step 408, transmission of the PDU set may be shown in step 409, step 410a to step 412a (Manner A), or step 410b to step 412b (Manner B). Manner A may correspond to Manner 1 in FIG. 2, and Manner B may correspond to Manner 2 in FIG. 2. For descriptions related to a service, refer to corresponding descriptions in FIG. 2.

Step 409: The UPF receives a downlink media data packet from an AS.

### Manner A

Step 410a: The UPF detects the received downlink media data packet to determine the PDU set, further identifies the type of the PDU set (for example, identifies an independent encoding type), and adds the type identifier to a GTP-U header of the downlink media data packet of the PDU set.

Specifically, if a media data packet of the media service is transmitted based on an RTP, the UPF may determine, based on header information of the RTP, data packets that form one PDU set and a type of the PDU set. Alternatively, the UPF may determine, based on a feature of the downlink media data packet, data packets that form one PDU set and a type of the PDU set.

For example, the UPF may determine a demarcation point of the current PDU set based on an "M" field of an RTP header of the downlink media data packet, or determine, based on a timestamp of the RTP header of the downlink media data packet, that data packets with a same timestamp belong to one PDU set; and determine, based on a sequence number of the RTP header of the downlink media data packet, a sequence of the data packets in the PDU set. Subsequently, the current PDU set may be determined to be of the independent encoding type based on an "I" field of an RTP extension header, or the type of the current PDU set may be determined based on a field of a 3^{rd} bit to an 8^{th} bit in a 1^{st} byte of an RTP data payload.

For another example, the UPF may use, based on an arrival status of the downlink media data packet, data packets that arrive together in a period of time as a data packet set, and determine, based on a size of the PDU set, whether the current PDU set is a PDU set of the independent encoding type.

Step 411a: The UPF sends the PDU set to the access network device through an N3 interface.

Correspondingly, the access network device receives the PDU set from the UPF.

Step 412a: The access network device performs scheduling and transmission on the received PDU set.

Specifically, if the GTP-U header of the PDU set carries the type identifier, the access network device determines the PSDT based on the type identifier and the correspondence that is between the type of the PDU set and the PSDT and that is obtained in step 406a, and further performs scheduling and transmission on the PDU set based on the PSDT. If the GTP-U header of the PDU set does not carry the type identifier or the carried type identifier does not belong to the type of the PDU set provided by the SMF, the access network device may perform scheduling and transmission on the PDU set based on a PSDB.

The access network device may send the PDU set to the terminal through a Uu interface.

### Manner B

Step 410b: The UPF detects the received downlink media data packet to determine the PDU set, further identifies the type of the PDU set (for example, identifies an independent encoding type), and maps the PDU set to a QoS flow corresponding to the type.

Specifically, if a media data packet of the media service is transmitted based on an RTP, the UPF may determine, based on header information of the RTP, data packets that form one PDU set and a type of the PDU set. Alternatively, the UPF may determine, based on a feature of the downlink media data packet, data packets that form one PDU set and a type of the PDU set.

For example, the UPF may determine a demarcation point of the current PDU set based on an "M" field of an RTP header of the downlink media data packet, or determine, based on a timestamp of the RTP header of the downlink media data packet, that data packets with a same timestamp belong to one PDU set; and determine, based on a sequence number of the RTP header of the downlink media data packet, a sequence of the data packets in the PDU set. Subsequently, the current PDU set may be determined to be of the independent encoding type based on an "I" field of an RTP extension header, or the type of the current PDU set may be determined based on a field of a 3^{rd} bit to an 8^{th} bit in a 1^{st} byte of an RTP data payload.

For another example, the UPF may use, based on an arrival status of the downlink media data packet, data packets that arrive together in a period of time as a data packet set, and determine, based on a size of the PDU set, whether the current PDU set is a PDU set of the independent encoding type.

Step 411b: The UPF sends the PDU set to the access network device through an N3 interface.

Correspondingly, the access network device receives the PDU set from the UPF.

Step 412b: The access network device performs scheduling and transmission on the received PDU set based on the QoS parameters of the QoS flow.

Specifically, the access network device performs scheduling and transmission on the PDU set based on the PSDT (if the PSDT is configured) or a PSDB in the QoS parameters. The PSDB herein may be a PSDB corresponding to a service to which the PDU set belongs.

The access network device may send the PDU set to the terminal through a Uu interface.

### Example 2

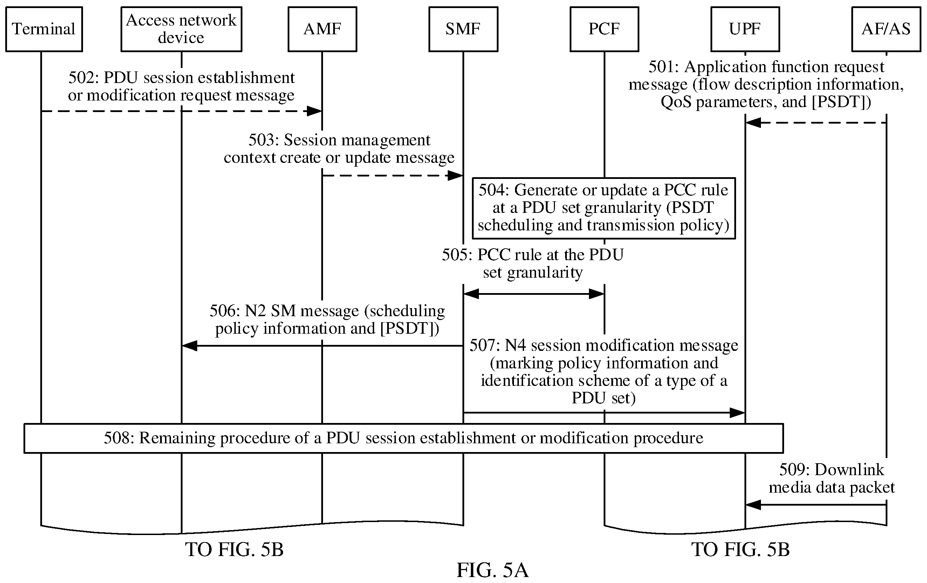

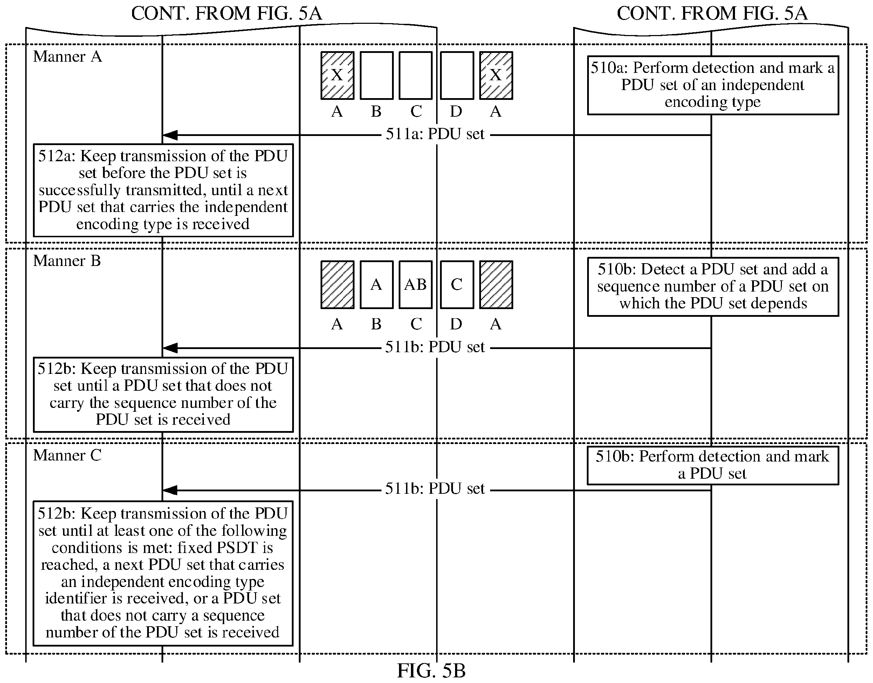

FIG. 5A and FIG. 5B show an example of a data transmission method in a communication system according to this application. FIG. 5A and FIG. 5B are a specific implementation of Manner 5, Manner 6, Manner 7, and Manner 8 in FIG. 2, and FIG. 3. For descriptions related to a service, refer to corresponding descriptions in FIG. 2 and FIG. 3.

In this example, an access network device performs dynamic scheduling and transmission on a PDU set based on a dependency relationship between PDU sets, so that different PDU sets use different PSDT.

Step 501: An AF sends an application function request message to a PCF.

Correspondingly, the PCF receives the application function request message from the AF.

The application function request message includes flow description information and QoS parameters at a PDU set granularity.

Optionally, the application function request message further includes indication information, and the indication information indicates to perform dynamic PSDT scheduling and transmission.

Optionally, the application function request message may further include: information indicating that a PDU set of an independent encoding type and a PDU set that follows the PDU set of the independent encoding type do not depend on a previous PDU set of the independent encoding type of the PDU set of the independent encoding type; or information indicating that PDU sets of different types depend on different PDU sets; or information indicating that a PDU set of an independent encoding type and a PDU set that follows the PDU set of the independent encoding type do not depend on a previous PDU set of the independent encoding type of the PDU set of the independent encoding type, and a fixed PSDT; or information indicating that PDU sets of different types depend on different PDU sets and a fixed PSDT. In other words, the AF may provide some information related to service encoding for the PCF, so that the PCF generates a PCC rule based on the obtained information.

Optionally, the fixed PSDT may be determined based on a threshold for triggering a receiving end (also referred to as a receiving end of a service) to send a retransmission request. After detecting that a PDU set of a specific type is not successfully received, the receiving end requests a transmitting end to resend the PDU set of the type. The threshold for triggering the receiving end to send the notification is the threshold for the receiving end to send the retransmission request. For example, an end moment of the PSDT is not later than the threshold.

Optionally, the fixed PSDT may alternatively be an empirical value of an application layer.

It should be noted that, if the AF is in a trusted domain (for example, the AF is an AF deployed by an operator), the AF may directly interact with the PCF. To be specific, the AF sends the fixed PSDT, the indication information, the flow description information, or other QoS parameters at the PDU set granularity to the PCF by invoking a service interface of the PCF, for example, an Npcf_PolicyAuthorization service interface. If the AF is in an untrusted domain (for example, the AF is a third-party AF), the AF interacts with the PCF through an NEF. To be specific, the AF sends the fixed PSDT, the indication information, the flow description information, or other QoS parameters at the PDU set granularity to the NEF by invoking a service interface of the NEF, for example, an Nnef_AFSessionWithQoS service interface. Then, the NEF sends the fixed PSDT, the indication information, the flow description information, or the other QoS parameters at the PDU set granularity to the PCF by invoking a service interface of the PCF, for example, an Npcf_PolicyAuthorization service interface.

Step 501 is an optional step.

Step 502: When a terminal initiates a PDU session establishment or modification procedure, the terminal sends a PDU session establishment request (PDU session establishment request) message or a PDU session modification request (PDU session modification request) message to an AMF.

Correspondingly, the AMF receives the PDU session establishment request message or the PDU session modification request message from the terminal.

Step 503: After receiving the PDU session establishment request message or the PDU session modification request message, the AMF sends a session management context create message (for example, Nsmf_PDUSession_CreateSMContext) or a session management context update message (for example, Nsmf_PDUSession_UpdateSMContext) to an SMF, where the PDU session establishment request message or the PDU session modification request message from the terminal is included.

Step 502 and step 503 are optional steps.

Step 504: The PCF generates the PCC rule based on the information from the AF.

The PCC rule includes the PSDT scheduling and transmission policy at the PDU set granularity. The PSDT scheduling and transmission policy includes: after transmission of the PDU set fails, keeping transmission of the PDU set within PSDT time until the PDU set is successfully transmitted or PSDT is reached.

Optionally, the PCC rule further includes: The access network device determines a dependency relationship between PDU sets based on a type identifier carried in the PDU set, to dynamically determine PSDT corresponding to the PDU set.

Specifically, the PCC rule may include: The access network device determines transmission duration of the PDU set based on an independent encoding type identifier.

The PCC rule may alternatively include: The access network device determines transmission duration of the PDU set based on a sequence number that is of a PDU set on which the PDU set depends and that is carried in the PDU set.

The PCC rule may alternatively include: The access network device determines PSDT of the PDU set based on the fixed PSDT and an independent encoding type identifier, or determines PSDT of the PDU set based on the fixed PSDT and a sequence number that is of a PDU set on which the PDU set depends and that is carried in the PDU set, or determines PSDT of the PDU set based on the fixed PSDT, an independent encoding type identifier, and a sequence number that is of a PDU set on which the PDU set depends and that is carried in the PDU set.

Step 505: The PCF sends the PCC rule at the PDU set granularity to the SMF.

Correspondingly, the SMF receives the PCC rule at the PDU set granularity from the PCF.

In a possible implementation, if the terminal initiates the PDU session establishment or modification procedure, that is, performs step 502 and step 503, the SMF actively initiates a session management policy association establishment or modification procedure, to obtain the PCC rule at the PDU set granularity from a PCF side.

In another possible implementation, the PCF initiates a session management policy association modification procedure, and sends the PCC rule at the PDU set granularity to the SMF. In this case, step 502 and step 503 may not be performed.

Step 506: The SMF sends an N2 SM message to the access network device based on the PCC rule at the PDU set granularity that is provided by the PCF.

Correspondingly, the access network device receives the N2 SM message from the SMF.

Specifically, the SMF may send the N2 SM message to the access network device through the AMF.

The N2 SM message includes scheduling policy information. The scheduling policy information indicates a scheduling manner in which the access network device schedules the PDU set. Specifically, the scheduling policy information indicates the access network device to perform dynamic PSDT scheduling and transmission. The scheduling policy information may be an indicator (indicator).

Optionally, the N2 SM message further includes the fixed PSDT.

Optionally, the scheduling policy information further indicates the access network device to dynamically determine or calculate, based on a type identifier or a mark in a GTP-U header of the PDU set, the PSDT corresponding to the PDU set. Details are as follows.

In a first case, the scheduling policy information may indicate the access network device to determine the transmission duration of the PDU set based on the independent encoding type identifier. That is, before a next PDU set or a new PDU set that carries the independent encoding type identifier is received, the current PDU set may be continuously transmitted.

In a second case, the scheduling policy information may indicate the access network device to determine the transmission duration of the PDU set based on the sequence number carried in the PDU set, and the sequence number is the sequence number of the PDU set on which the PDU set depends. When a subsequently received PDU set no longer depends on a specific PDU set, the access network device may stop retransmission of the PDU set on which the received PDU set does not depend. It should be noted that, "dependency" herein includes "direct dependency" and/or "indirect dependency". For example, for a PDU set 1, if a PDU set 2 depends on the PDU set 1, and a PDU set 3 does not depend on the PDU set 1 but depends on the PDU set 2, the PDU set 1 still needs to be transmitted when the PDU set 3 is received.

In a third case, the scheduling policy information may indicate the access network device to determine the PSDT of the PDU set based on the fixed PSDT and PSDT 1 determined in the manner in the first case, or determine the PSDT of the PDU set based on the fixed PSDT and PSDT 2 determined in the manner in the second case, or determine the PSDT of the PDU set based on the fixed PSDT, PSDT 1 determined in the manner in the first case, and PSDT 2 determined in the manner in the second case. In this case, PSDT finally used to transmit the PDU set may be a smaller one of the fixed PSDT and the PSDT 1, a smaller one of the fixed PSDT and the PSDT 2, or a smallest one of the fixed PSDT, the PSDT 1, and the PSDT 2.

Step 507: The SMF sends an N4 session modification message to a UPF based on the PCC rule at the PDU set granularity that is provided by the PCF.

Correspondingly, the UPF receives the N4 session modification message from the SMF.

The N4 session modification message includes an N4 rule. The N4 rule includes marking policy information and an identification scheme of a type of the PDU set. The marking policy information indicates a marking policy of the PDU set. For the first case, the marking policy may be adding a type identifier to a GTP-U header of the PDU set of the independent encoding type. For the second case, the marking policy may be adding a sequence number of a PDU set on which the PDU set depends to a GTP-U header of the PDU set. For the third case, the marking policy may be adding a type identifier to a GTP-U header of the PDU set of the independent encoding type or adding a sequence number of a PDU set on which the PDU set depends to a GTP-U header of the PDU set.

Step 508: Perform a remaining procedure of the PDU session establishment or modification procedure.

For a specific procedure, refer to the related technology, for example, section 4.3.2.1 in TS 23.502. Details are not described herein.

After step 501 to step 508, transmission of the PDU set may be shown in step 509, step 510a to step 512a (Manner A, corresponding to the first case), step 510b to step 512b (Manner B, corresponding to the third case), or step 510c to step 512c (Manner C, corresponding to the third case). Manner A may correspond to Manner 5 in FIG. 2, Manner B may correspond to Manner 6 in FIG. 2, and Manner C may correspond to Manner 7 and Manner 8 in FIG. 2. For descriptions related to a service, refer to corresponding descriptions in FIG. 2.

Step 509: The UPF receives a downlink media data packet from an AS.

### Manner A

Step 510a: The UPF detects the received downlink media data packet to determine the PDU set, further identifies the PDU set of the independent encoding type, and adds the type identifier to a GTP-U header of the downlink media data packet of the PDU set. For a manner in which the UPF determines the PDU set and identifies the PDU set of the independent encoding type, refer to step 410a or step 410b. Details are not described herein again.

Step 511a: The UPF sends the PDU set to the access network device through an N3 interface.

Correspondingly, the access network device receives the PDU set from the UPF.

Step 512a: The access network device performs scheduling and transmission on the received PDU set.

Specifically, the access network device keeps transmission of the PDU set before the PDU set is successfully transmitted, until a next PDU set that carries the independent encoding type identifier is received. That is, before the PDU set affected by the PDU set of the independent encoding type is successfully transmitted, transmission of the PDU set of the independent encoding type may be kept.

For example, as shown in FIG. 5A and FIG. 5B, before a 2^{nd} PDU set A arrives, transmission of a 1^{st} PDU set A may be kept. Optionally, before the 2^{nd} PDU set A arrives, transmission of PDU sets B, C, and D may be kept.

The access network device may send the PDU set to the terminal through a Uu interface.

### Manner B

Step 510b: The UPF detects the received downlink media data packet to determine the PDU set, and further adds the sequence number of the PDU set on which the PDU set depends to the PDU set. Specifically, the UPF may determine a corresponding dependency relationship between the current PDU set and another PDU set based on additional information added by the application server to the downlink data packet, and correspondingly add the sequence number of the PDU set on which the PDU set depends to a GTP-U header of the data packet of the PDU set.

That is, the UPF determines the PDU set on which the PDU set depends.

Step 511b: The UPF sends the PDU set to the access network device through an N3 interface.

Correspondingly, the access network device receives the PDU set from the UPF.

Step 512b: The access network device keeps transmission of the PDU set until a PDU set that does not carry the sequence number of the PDU set is received.

To be specific, the access network device keeps transmission of the PDU set until a subsequent PDU set no longer depends on the PDU set, or the access network device stops transmission of the PDU set after a subsequent PDU set of a specific PDU set is not affected.

For example, as shown in FIG. 5A and FIG. 5B, the access network device stops transmission of a 1^{st} PDU set A when receiving a 2^{nd} PDU set A.

The access network device may send the PDU set to the terminal through a Uu interface.

### Manner C

Step 510c: The UPF detects the received downlink media data packet to determine the PDU set, further identifies the PDU set of the independent encoding type, and adds the independent encoding type identifier to the PDU set, or adds the sequence number of the PDU set on which the PDU set depends to the PDU set. For a manner in which the UPF determines the PDU set and identifies the PDU set of the independent encoding type, refer to step 410a or step 410b. Details are not described herein again.

Step 511c: The UPF sends the PDU set to the access network device through an N3 interface.

Correspondingly, the access network device receives the PDU set from the UPF.

Step 512c: The access network device keeps transmission of the PDU set until at least one of the following conditions is met: the fixed PSDT is reached, a next PDU set that carries the independent encoding type identifier is received, or a PDU set that does not carry the sequence number of the PDU set is received. A specific condition that needs to be met corresponds to a scheduling policy indicated by the scheduling policy information in the third case in step 506.

The access network device may send the PDU set to the terminal through a Uu interface.

### Example 3

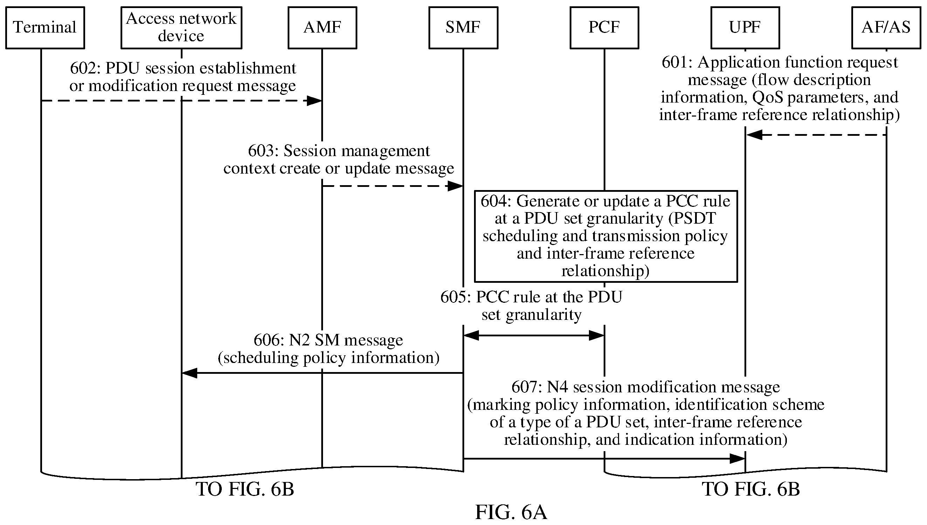

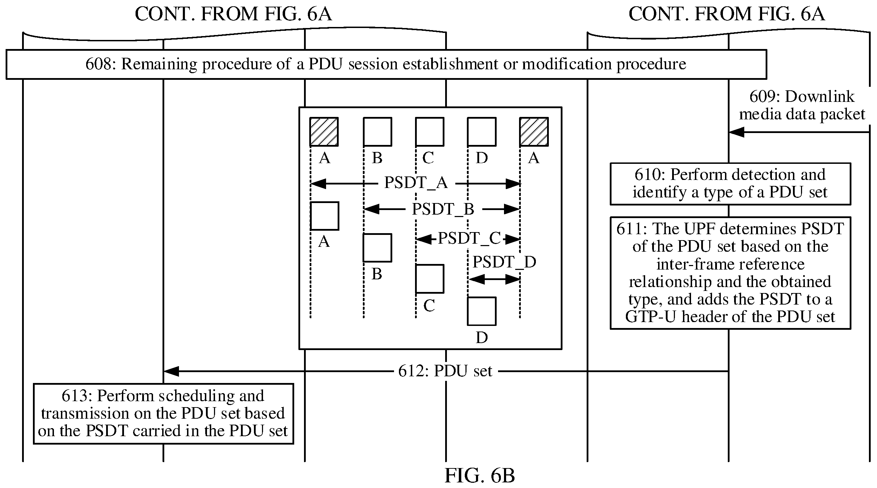

FIG. 6A and FIG. 6B show an example of a data transmission method in a communication system according to this application. FIG. 6A and FIG. 6B are a specific implementation of Manner 3 in FIG. 2 and FIG. 3. An inter-frame reference relationship may correspond to the dependency relationship in FIG. 2 and FIG. 3. For descriptions related to a service, refer to corresponding descriptions in FIG. 2 and FIG. 3.

In this example, a UPF determines PSDT of each PDU set based on a fixed inter-frame reference relationship, and sends the PSDT to an access network device through a GTP-U layer, so that the access network device can perform scheduling and transmission based on the PSDT carried in the PDU set.

Step 601: An AF sends an application function request message to a PCF.

Correspondingly, the PCF receives the application function request message from the AF.

The application function request message includes an inter-frame reference relationship. The inter-frame reference relationship indicates a fixed reference relationship between different PDU sets. The inter-frame reference relationship may be updated through step 601.

Optionally, the application function request message further includes flow description information and other QoS parameters at a PDU set granularity.

Optionally, the application function request message further includes indication information, and the indication information indicates to perform dynamic PSDT scheduling and transmission. Specifically, the indication information may indicate to perform dynamic PSDT scheduling and transmission based on the inter-frame reference relationship.

It should be noted that, if the AF is in a trusted domain (for example, the AF is an AF deployed by an operator), the AF may directly interact with the PCF. To be specific, the AF sends the inter-frame reference relationship, the indication information, the flow description information, or the other QoS parameters at the PDU set granularity to the PCF by invoking a service interface of the PCF, for example, an Npcf_PolicyAuthorization service interface. If the AF is in an untrusted domain (for example, the AF is a third-party AF), the AF interacts with the PCF through an NEF. To be specific, the AF sends the inter-frame reference relationship, the indication information, the flow description information, or the other QoS parameters at the PDU set granularity to the NEF by invoking a service interface of the NEF, for example, an Nnef_AFSessionWithQoS service interface. Then, the NEF sends the inter-frame reference relationship, the indication information, the flow description information, or the other QoS parameters at the PDU set granularity to the PCF by invoking a service interface of the PCF, for example, an Npcf_PolicyAuthorization service interface.

Step 601 is an optional step.

Step 602: When a terminal initiates a PDU session establishment or modification procedure, the terminal sends a PDU session establishment request (PDU session establishment request) message or a PDU session modification request (PDU session modification request) message to an AMF.

Correspondingly, the AMF receives the PDU session establishment request message or the PDU session modification request message from the terminal.

Step 603: After receiving the PDU session establishment request message or the PDU session modification request message, the AMF sends a session management context create message (for example, Nsmf_PDUSession_CreateSMContext) or a session management context update message (for example, Nsmf_PDUSession_UpdateSMContext) to an SMF, where the PDU session establishment request message or the PDU session modification request message from the terminal is included.

Step 602 and step 603 are optional steps.

Step 604: The PCF generates a PCC rule based on information from the AF.

The PCC rule includes a PSDT scheduling and transmission policy at the PDU set granularity. The PSDT scheduling and transmission policy includes: after transmission of the PDU set fails, keeping transmission of the PDU set within PSDT time until the PDU set is successfully transmitted or PSDT is reached. The PCC rule includes: The UPF dynamically determines, based on the inter-frame reference relationship, the PSDT corresponding to the PDU set.

Step 605: The PCF sends the PCC rule at the PDU set granularity to the SMF.

Correspondingly, the SMF receives the PCC rule at the PDU set granularity from the PCF.

In a possible implementation, if the terminal initiates the PDU session establishment or modification procedure, that is, performs step 602 and step 603, the SMF actively initiates a session management policy association establishment or modification procedure, to obtain the PCC rule at the PDU set granularity from a PCF side.

In another possible implementation, the PCF initiates a session management policy association modification procedure, and sends the PCC rule at the PDU set granularity to the SMF. In this case, step 602 and step 603 may not be performed.

Step 606: The SMF sends an N2 SM message to the access network device based on the PCC rule at the PDU set granularity that is provided by the PCF.

Correspondingly, the access network device receives the N2 SM message from the SMF.

Specifically, the SMF may send the N2 SM message to the access network device through the AMF.

The N2 SM message includes scheduling policy information. The scheduling policy information indicates a scheduling manner in which the access network device schedules the PDU set. Specifically, the scheduling policy information indicates the access network device to perform scheduling and transmission on the PSDT based on the PSDT carried in the PDU set. The scheduling policy information may be an indicator (indicator).

Optionally, the scheduling policy information further indicates the access network device to determine, based on the PSDT in a GTP-U header of the PDU set, the PSDT corresponding to the PDU set.

Step 607: The SMF sends an N4 session modification message to the UPF based on the PCC rule at the PDU set granularity that is provided by the PCF.

Correspondingly, the UPF receives the N4 session modification message from the SMF.

The N4 session modification message includes an N4 rule. The N4 rule includes marking policy information, an identification scheme of a type of the PDU set, and the inter-frame reference relationship. The marking policy information indicates a marking policy of the PDU set, and the marking policy is adding the PSDT to the PDU set.

Optionally, the N4 rule further includes indication information, and the indication information indicates the UPF to determine the PSDT of the PDU set based on the inter-frame reference relationship.

Step 608: Perform a remaining procedure of the PDU session establishment or modification procedure.

For a specific procedure, refer to the related technology, for example, section 4.3.2.1 in TS 23.502. Details are not described herein.

After step 601 to step 608, transmission of the PDU set may be shown in step 609 to step 613.

Step 609: The UPF receives a downlink media data packet from an AS.

Step 610: The UPF detects the received downlink media data packet to determine the PDU set, and further identifies the type of the PDU set. For a manner in which the UPF determines the PDU set and identifies the type of the PDU set, refer to step 410a or step 410b. Details are not described herein again.

Step 611: The UPF determines the PSDT of the PDU set based on the inter-frame reference relationship and the obtained type, and adds the PSDT to the GTP-U header of the PDU set.

Specifically, the UPF determines a reference relationship between the PDU set and another PDU set based on the inter-frame reference relationship and the obtained type, and determines the PSDT of the PDU set based on the reference relationship between the PDU set and the another PDU set. The type herein may also be understood as a position of the PDU set in a group of PDU sets. The group of PDU sets may be, for example, PDU sets in a same GOP.

For example, as shown in FIG. 6A and FIG. 6B, when receiving a PDU set A, the UPF determines, based on the inter-frame reference relationship and a type of the PDU set A, that PSDT of the PDU set A is PDST_A. When receiving a PDU set B, the UPF determines, based on the inter-frame reference relationship and a type of the PDU set B, that PSDT of the PDU set B is PDST_B. When receiving a PDU set C, the UPF determines, based on the inter-frame reference relationship and a type of the PDU set C, that PSDT of the PDU set C is PDST_C. When receiving a PDU set D, the UPF determines, based on the inter-frame reference relationship and a type of the PDU set D, that PSDT of the PDU set D is PDST_D.

Step 612: The UPF sends the PDU set to the access network device through an N3 interface.

Correspondingly, the access network device receives the PDU set from the UPF.

Step 613: The access network device performs scheduling and transmission on the received PDU set.

Specifically, the access network device performs scheduling and transmission on the PDU set based on the PSDT carried in the PDU set. The access network device may send the PDU set to the terminal through a Uu interface.

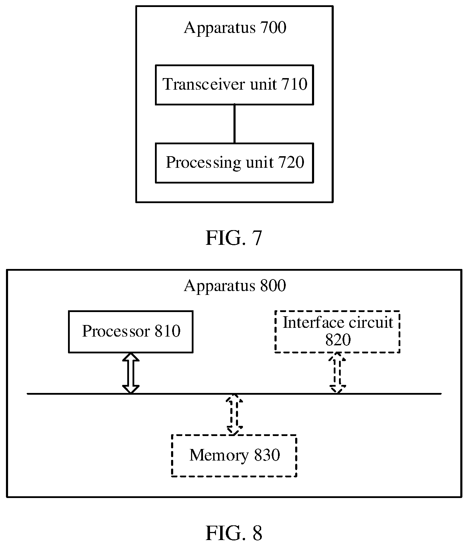

The foregoing describes in detail the method provided in this application with reference to FIG. 2 to FIG. 6A and FIG. 6B. The following describes in detail apparatus embodiments of this application with reference to FIG. 7 and FIG. 8.

It may be understood that, to implement the functions in the foregoing embodiments, the apparatus in FIG. 7 or FIG. 8 includes a corresponding hardware structure and/or software module for performing each function. A person skilled in the art should be easily aware that, in this application, the units and the method steps in the examples described with reference to embodiments disclosed in this application can be implemented by hardware or a combination of hardware and computer software.

FIG. 7 and FIG. 8 each are a diagram of a structure of a possible apparatus according to an embodiment of this application. These apparatuses may be configured to implement functions of the access network device, the user plane function network element, the session management function, the policy control function network element, or the application function network element in the foregoing method embodiments, and therefore can also implement beneficial effects of the foregoing method embodiments.

As shown in FIG. 7, the apparatus 700 includes a transceiver unit 710 and a processing unit 720.

When the apparatus 700 is configured to implement a function of the access network device in the foregoing method embodiment, the transceiver unit 710 is configured to: receive a PDU set of a service used on a terminal, where the PDU set includes a first PDU set and a second PDU set, and a service to which the first PDU set belongs is the same as a service to which the second PDU set belongs; send the first PDU set to the terminal within first duration; and send the second PDU set to the terminal within second duration. The first duration is different from the second duration.

Optionally, a start moment of the first duration is an end moment of a PSDB corresponding to the service to which the first PDU set belongs; or a start moment of the first duration is a moment at which the access network device receives the first PDU set, and the first duration is greater than a PSDB corresponding to the service to which the first PDU set belongs; and/or a start moment of the second duration is an end moment of a PSDB corresponding to the service to which the second PDU set belongs; or a start moment of the second duration is a moment at which the access network device receives the second PDU set, and the second duration is greater than a PSDB corresponding to the service to which the second PDU set belongs.

Optionally, the processing unit 720 is configured to: discard the first PDU set when the first duration is reached or the first PDU set is successfully transmitted within the first duration; and/or discard the second PDU set when the second duration is reached or the second PDU set is successfully transmitted within the second duration.

Optionally, the processing unit 720 is further configured to: determine, based on a type identifier carried in the first PDU set, that a type of the first PDU set is a first type; and determine the first duration based on the first type and a correspondence between the first type and the first duration; and/or determine, based on a type identifier carried in the second PDU set, that a type of the second PDU set is a second type; and determine the second duration based on the second type and a correspondence between the second type and the second duration. The first type is different from the second type.

Optionally, the processing unit 720 is further configured to: determine the type of the PDU set based on at least one of the following information: a size of the PDU set, an encoding feature of the PDU set, or a traffic feature of a service flow in which the PDU set is located.

Optionally, the transceiver unit 710 is further configured to: receive, from a session management function network element, the correspondence between the first type and the first duration and/or the correspondence between the second type and the second duration.

Optionally, the processing unit 720 is further configured to: obtain, based on a first QFI carried in the first PDU set, the first duration from a first QoS parameter of a first QoS flow corresponding to the first QFI, where the first QoS flow is used for transmission of a PDU set of a first type, and a type of the first PDU set is the first type; and/or obtain, based on a second QFI carried in the second PDU set, the second duration from a second QoS parameter of a second QoS flow corresponding to the second QFI, where the second QoS flow is used for transmission of a PDU set of a second type, and a type of the second PDU set is the second type. The first type is different from the second type.

Optionally, the transceiver unit 710 is further configured to: receive the first QoS parameter and/or the second QoS parameter from the session management function network element.

Optionally, the transceiver unit 710 is further configured to: receive scheduling policy information from the session management function network element, where the scheduling policy information indicates the access network device to send the PDU set based on duration corresponding to the type of the PDU set.

Optionally, the first PDU set carries the first duration, and the second PDU set carries the second duration; and the method further includes: The access network device obtains the first duration from the first PDU set; and/or the access network device obtains the second duration from the second PDU set.

Optionally, the transceiver unit 710 is further configured to: receive the scheduling policy information from the session management function network element, where the scheduling policy information indicates the access network device to send the PDU set based on the duration carried in the PDU set.

Optionally, the processing unit 720 is further configured to: determine the first duration based on a quantity of PDU sets that depend on the first PDU set; and/or determine the second duration based on a quantity of PDU sets that depend on the second PDU set.

Optionally, the transceiver unit 710 is further configured to: receive a dependency relationship between different PDU sets from a session management function network element; and the processing unit 720 is further configured to: determine, based on the dependency relationship, the quantity of PDU sets that depend on the first PDU set and/or the quantity of PDU sets that depend on the second PDU set.

Optionally, an end moment of the first duration and/or an end moment of the second duration are/is moments/a moment at which the access network device receives a next PDU set that carries an independent encoding type identifier.

Optionally, an end moment of the first duration is a moment at which the access network device receives a third PDU set, and the third PDU set is a 1^{st} PDU set that follows the first PDU set and that does not have a dependency relationship with the first PDU set; and/or an end moment of the second duration is a moment at which the access network device receives a fourth PDU set, and the fourth PDU set is a 1^{st} PDU set that follows the second PDU set and that does not have a dependency relationship with the second PDU set.

Optionally, an end moment of the first duration is an earlier one of an end moment of first preset duration and the following moment: a moment at which the access network device receives a next PDU set that carries an independent encoding type identifier; or a moment at which the access network device receives a third PDU set, and the third PDU set is a 1^{st} PDU set that follows the first PDU set and that does not have a dependency relationship with the first PDU set; and/or an end moment of the second duration is an earlier one of an end moment of second preset duration and the following moment: a moment at which the access network device receives a next PDU set that carries an independent encoding type identifier; or a moment at which the access network device receives a fourth PDU set, and the fourth PDU set is a 1^{st} PDU set that follows the second PDU set and that does not have a dependency relationship with the second PDU set.

Optionally, the transceiver unit 710 is further configured to: receive the first preset duration and/or the second preset duration from the session management function network element.

Optionally, the third PDU set carries a first sequence number of a PDU set on which the third PDU set depends, and the first sequence number does not include a sequence number of the first PDU set; and/or the fourth PDU set carries a second sequence number of a PDU set on which the fourth PDU set depends, and the second sequence number does not include a sequence number of the second PDU set.

Optionally, the transceiver unit 710 is further configured to: receive the scheduling policy information from the session management function network element, where the scheduling policy information indicates the access network device to perform dynamic scheduling on the PDU set.

When the apparatus 700 is configured to implement a function of the user plane function network element in the foregoing method embodiment, the transceiver unit 710 is configured to: receive a PDU set of a service used on a terminal, where the PDU set includes a first PDU set and a second PDU set, and a service to which the first PDU set belongs is the same as a service to which the second PDU set belongs. The processing unit 720 is configured to: add first duration to the first PDU set based on a quantity of PDU sets that depend on the first PDU set, where the first duration is duration based on which an access network device sends the first PDU set; and add second duration to the second PDU set based on a quantity of PDU sets that depend on the second PDU set, where the second duration is duration based on which the access network device sends the second PDU set. The transceiver unit 710 is further configured to: send, to the access network device, the first PDU set that carries the first duration; and send, to the access network device, the second PDU set that carries the second duration. The first duration is different from the second duration.

Optionally, a start moment of the first duration is an end moment of a PSDB corresponding to the service to which the first PDU set belongs; or a start moment of the first duration is a moment at which the access network device receives the first PDU set, and the first duration is greater than a PSDB corresponding to the service to which the first PDU set belongs; and/or a start moment of the second duration is an end moment of a PSDB corresponding to the service to which the second PDU set belongs; or a start moment of the second duration is a moment at which the access network device receives the second PDU set, and the second duration is greater than a PSDB corresponding to the service to which the second PDU set belongs.

Optionally, the transceiver unit 710 is further configured to: receive a dependency relationship between different PDU sets from a session management function network element; and the processing unit 720 is further configured to: determine, based on the dependency relationship, the quantity of PDU sets that depend on the first PDU set and/or the quantity of PDU sets that depend on the second PDU set.

Optionally, the transceiver unit 710 is further configured to receive marking policy information from a session management function network element, where the marking policy information indicates to add the duration to the PDU set.

When the apparatus 700 is configured to implement a function of the session management function network element in the foregoing method embodiment, the transceiver unit 710 is configured to: receive first information, where the first information indicates to perform scheduling and transmission of different duration on different PDU sets; and send scheduling policy information to an access network device based on the first information, where the scheduling policy information indicates a scheduling manner of a PDU set, and the scheduling manner includes at least one of the following: transmitting the PDU set based on duration corresponding to a type of the PDU set, transmitting the PDU set based on duration carried in the PDU set, or performing dynamic scheduling on the PDU set.

Optionally, the first information includes at least one of the following information: a correspondence between different PDU set types and duration, a dependency relationship between different PDU sets, preset duration, or a plurality of QoS parameters, a plurality of QoS flows corresponding to the plurality of QoS parameters are used for transmission of a plurality of different types of PDU sets, and each of the plurality of QoS parameters includes duration for transmitting a PDU set. The sending unit 710 is further configured to send at least one of the following information to the access network device: the correspondence, the dependency relationship, the preset duration, or the plurality of QoS parameters.

Optionally, when the scheduling policy information indicates to transmit the PDU set based on the duration carried in the PDU set, the sending unit 710 is further configured to: send marking policy information to a user plane function network element, where the marking policy information indicates to add the duration to the PDU set.

Optionally, a start moment of the duration is an end moment of a PSDB corresponding to the service to which the PDU set belongs; or a start moment of the duration is a moment at which the access network device receives the PDU set, and the duration is greater than a PSDB corresponding to the service to which the PDU set belongs.

When the apparatus 700 is configured to implement a function of the policy control function network element in the foregoing method embodiment, the transceiver unit 710 or the processing unit 720 is configured to: obtain first information, where the first information indicates to perform scheduling and transmission of different duration on different PDU sets; and the transceiver unit 710 is configured to: send the first information to a session management function network element.

Optionally, the first information includes at least one of the following information: a correspondence between different PDU set types and duration, a dependency relationship between different PDU sets, preset duration, or a plurality of QoS parameters, a plurality of QoS flows corresponding to the plurality of QoS parameters are used for transmission of a plurality of different types of PDU sets, and each of the plurality of QoS parameters includes duration for transmitting a PDU set.

Optionally, the transceiver unit 710 is further configured to: receive an application function request message from an application function network element, where the application function request message includes at least one of the following information: the correspondence, the dependency relationship, or the preset duration. The processing unit 720 is specifically configured to: generate the first information based on the application function request message from the application function network element.

Optionally, a start moment of the duration is an end moment of a PSDB corresponding to the service to which the PDU set belongs; or a start moment of the duration is a moment at which the access network device receives the PDU set, and the duration is greater than a PSDB corresponding to the service to which the PDU set belongs.

When the apparatus 700 is configured to implement a function of the application function network element in the foregoing method embodiment, the transceiver unit 710 is configured to: send an application function request message to a policy control function network element, where the application function request message includes at least one of the following information: a correspondence between different PDU set types and duration, a dependency relationship between different PDU sets, or preset duration, and the duration is duration for sending a PDU set by an access network device.

Optionally, the processing unit 720 is configured to generate the first information.

Optionally, a start moment of the duration is an end moment of a PSDB corresponding to the service to which the PDU set belongs; or a start moment of the duration is a moment at which the access network device receives the PDU set, and the duration is greater than a PSDB corresponding to the service to which the PDU set belongs.

For more detailed descriptions of the transceiver unit 710 and the processing unit 720, refer to related descriptions in the foregoing method embodiments. Details are not described herein again.

As shown in FIG. 8, the apparatus 800 includes a processor 810. The processor 810 is coupled to a memory 830, and the memory 830 is configured to store instructions. When the apparatus 800 is configured to implement the foregoing method, the processor 810 is configured to execute the instructions in the memory 830, to implement a function of the foregoing processing unit 720.

Optionally, the apparatus 800 further includes the memory 830.

Optionally, the apparatus 800 further includes an interface circuit 820. The processor 810 and the interface circuit 820 are coupled to each other. It may be understood that the interface circuit 820 may be a transceiver or an input/output interface. When the apparatus 800 is configured to implement the foregoing method, the processor 810 is configured to execute the instructions, to implement the function of the foregoing processing unit 720, and the interface circuit 820 is configured to implement a function of the foregoing transceiver unit 710.

For example, when the apparatus 800 is a chip used in an access network device, a user plane function network element, a session management function, a policy control function network element, or an application function network element, the chip implements functions of the access network device, the user plane function network element, the session management function, the policy control function network element, or the application function network element in the foregoing method embodiments. The chip receives information from another module (such as a radio frequency module or an antenna) in the access network device, the user plane function network element, the session management function, the policy control function network element, or the application function network element, where the information is sent by the another apparatus to the access network device, the user plane function network element, the session management function, the policy control function network element, or the application function network element; or the chip sends information to another module (such as a radio frequency module or an antenna) in the access network device, the user plane function network element, the session management function, the policy control function network element, or the application function network element, where the information is sent by the access network device, the user plane function network element, the session management function, the policy control function network element, or the application function network element to the another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiment. Optionally, there are one or more processors. Optionally, the communication apparatus includes the memory. Optionally, there are one or more memories. Optionally, the memory and the processor are integrated together or disposed separately.

This application further provides a computer-readable storage medium, and the computer-readable storage medium stores computer instructions used to implement the method performed by the access network device, the user plane function network element, the session management function, the policy control function network element, or the application function network element in the foregoing method embodiments.

This application further provides a computer program product, including instructions. When the instructions are executed by a computer, the method performed by the access network device, the user plane function network element, the session management function, the policy control function network element, or the application function network element in the foregoing method embodiments is implemented.

This application further provides a communication system. The communication system includes at least one of the access network device, the user plane function network element, the session management function, the policy control function network element, or the application function network element in the foregoing embodiments.

For descriptions and beneficial effect of related content of any one of the apparatuses provided above, refer to a corresponding method embodiment provided above. Details are not described herein again.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the access network device, the user plane function network element, the session management function, the policy control function network element, or the application function network element. Certainly, the processor and the storage medium may alternatively exist in the access network device, the user plane function network element, the session management function, the policy control function network element, or the application function network element as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in the embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method in a communication system, wherein the method comprises:
receiving a protocol data unit PDU set of a service used on a terminal, wherein the PDU set comprises a first PDU set and a second PDU set, and a service to which the first PDU set belongs is the same as a service to which the second PDU set belongs;
sending the first PDU set to the terminal within first duration; and
sending the second PDU set to the terminal within second duration, wherein
the first duration is different from the second duration.

2. The method according to claim 1, wherein
a start moment of the first duration is an end moment of a PDU set delay budget PSDB corresponding to the service to which the first PDU set belongs; or a start moment of the first duration is a moment at which an access network device receives the first PDU set, and the first duration is greater than a PSDB corresponding to the service to which the first PDU set belongs; and/or
a start moment of the second duration is an end moment of a PSDB corresponding to the service to which the second PDU set belongs; or a start moment of the second duration is a moment at which an access network device receives the second PDU set, and the second duration is greater than a PSDB corresponding to the service to which the second PDU set belongs.

3. The method according to claim 1 or 2, wherein the method further comprises:
discarding, by the access network device, the first PDU set when the first duration is reached or the first PDU set is successfully transmitted within the first duration; and/or
discarding, by the access network device, the second PDU set when the second duration is reached or the second PDU set is successfully transmitted within the second duration.

4. The method according to any one of claims 1 to 3, wherein the method further comprises:
determining, based on a type identifier carried in the first PDU set, that a type of the first PDU set is a first type; and determining, by the access network device, the first duration based on the first type and a correspondence between the first type and the first duration; and/or
determining, based on a type identifier carried in the second PDU set, that a type of the second PDU set is a second type; and determining, by the access network device, the second duration based on the second type and a correspondence between the second type and the second duration.

5. The method according to any one of claims 1 to 3, wherein the method further comprises:
obtaining, based on a first quality of service flow identifier QFI corresponding to the first PDU set, the first duration from a first quality of service QoS parameter of a first QoS flow corresponding to the first QFI, wherein the first QoS flow is used for transmission of a PDU set of a first type, and a type of the first PDU set is the first type; and/or
obtaining, based on a second QFI corresponding to the second PDU set, the second duration from a second QoS parameter of a second QoS flow corresponding to the second QFI, wherein the second QoS flow is used for transmission of a PDU set of a second type, and a type of the second PDU set is the second type.

6. The method according to any one of claims 1 to 3, wherein
the first PDU set carries the first duration, and the second PDU set carries the second duration; and
the method further comprises:
obtaining the first duration from the first PDU set; and/or
obtaining the second duration from the second PDU set.

7. The method according to any one of claims 1 to 3, wherein the method further comprises:
determining the first duration based on a quantity of PDU sets that depend on the first PDU set; and/or
determining the second duration based on a quantity of PDU sets that depend on the second PDU set.

8. The method according to any one of claims 1 to 3, wherein
an end moment of the first duration and/or an end moment of the second duration are/is moments/a moment at which the access network device receives a next PDU set that carries an independent encoding type identifier.

9. The method according to any one of claims 1 to 3, wherein
an end moment of the first duration is a moment at which the access network device receives a third PDU set, and the third PDU set is a 1^{st} PDU set that follows the first PDU set and that does not have a dependency relationship with the first PDU set; and/or
an end moment of the second duration is a moment at which the access network device receives a fourth PDU set, and the fourth PDU set is a 1^{st} PDU set that follows the second PDU set and that does not have a dependency relationship with the second PDU set.

10. The method according to any one of claims 1 to 3, wherein
an end moment of the first duration is an earlier one of an end moment of first preset duration and the following moment: a moment at which the access network device receives a next PDU set that carries an independent encoding type identifier; or a moment at which the access network device receives a third PDU set, and the third PDU set is a 1^{st} PDU set that follows the first PDU set and that does not have a dependency relationship with the first PDU set; and/or
an end moment of the second duration is an earlier one of an end moment of second preset duration and the following moment: a moment at which the access network device receives a next PDU set that carries an independent encoding type identifier; or a moment at which the access network device receives a fourth PDU set, and the fourth PDU set is a 1^{st} PDU set that follows the second PDU set and that does not have a dependency relationship with the second PDU set.

11. The method according to claim 9 or 10, wherein
the third PDU set carries a first sequence number of a PDU set on which the third PDU set depends, and the first sequence number does not comprise a sequence number of the first PDU set; and/or
the fourth PDU set carries a second sequence number of a PDU set on which the fourth PDU set depends, and the second sequence number does not comprise a sequence number of the second PDU set.

12. The method according to any one of claims 1 to 4 and claims 6 to 11, wherein
the first PDU set and the second PDU set are carried on a same QoS flow.

13. The method according to any one of claims 1 to 11, wherein
the first PDU set and the second PDU set are different media frames or slices of a same media service.

14. The method according to claim 13, wherein
the media service comprises at least one of the following services: a virtual reality VR service, an augmented reality AR service, a mixed reality MR service, or a cloud game service.

15. A data transmission method in a communication system, wherein the method comprises:
receiving a protocol data unit PDU set of a service used on a terminal, wherein the PDU set comprises a first PDU set and a second PDU set, and a service to which the first PDU set belongs is the same as a service to which the second PDU set belongs;
adding first duration to the first PDU set based on a quantity of PDU sets that depend on the first PDU set, wherein the first duration is duration based on which an access network device sends the first PDU set;
adding second duration to the second PDU set based on a quantity of PDU sets that depend on the second PDU set, wherein the second duration is duration based on which the access network device sends the second PDU set;
sending, to the access network device, the first PDU set that carries the first duration; and
sending, to the access network device, the second PDU set that carries the second duration, wherein
the first duration is different from the second duration.

16. The method according to claim 15, wherein
a start moment of the first duration is an end moment of a PDU set delay budget PSDB corresponding to the service to which the first PDU set belongs; or a start moment of the first duration is a moment at which the access network device receives the first PDU set, and the first duration is greater than a PSDB corresponding to the service to which the first PDU set belongs; and/or
a start moment of the second duration is an end moment of a PSDB corresponding to the service to which the second PDU set belongs; or a start moment of the second duration is a moment at which the access network device receives the second PDU set, and the second duration is greater than a PSDB corresponding to the service to which the second PDU set belongs.

17. The method according to claim 15 or 16, wherein the method further comprises:
receiving marking policy information from a session management function network element, wherein the marking policy information indicates to add the duration to the PDU set.

18. The method according to any one of claims 15 to 17, wherein
the first PDU set and the second PDU set are carried on a same QoS flow.

19. The method according to any one of claims 15 to 17, wherein
the first PDU set and the second PDU set are different media frames or slices of a same media service.

20. The method according to claim 19, wherein
the media service comprises at least one of the following services: a virtual reality VR service, an augmented reality AR service, a mixed reality MR service, or a cloud game service.

21. A data transmission method in a communication system, wherein the method comprises:
receiving first information, wherein the first information indicates to perform scheduling and transmission of different duration on different protocol data unit PDU sets; and
sending scheduling policy information to an access network device based on the first information, wherein the scheduling policy information indicates a scheduling manner of a PDU set, and the scheduling manner comprises at least one of the following: transmitting the PDU set based on duration corresponding to a type of the PDU set, transmitting the PDU set based on duration carried in the PDU set, or performing dynamic scheduling on the PDU set.

22. The method according to claim 21, wherein
the first information comprises at least one of the following information: a correspondence between different PDU set types and duration, a dependency relationship between different PDU sets, preset duration, or a plurality of quality of service QoS parameters, a plurality of QoS flows corresponding to the plurality of QoS parameters are used for transmission of a plurality of different types of PDU sets, and each of the plurality of QoS parameters comprises duration for transmitting a PDU set; and
the method further comprises:
sending at least one of the following information to the access network device: the correspondence, the dependency relationship, the preset duration, or the plurality of QoS parameters.

23. The method according to claim 22, wherein when the scheduling policy information indicates to transmit the PDU set based on the duration carried in the PDU set, the method further comprises:
sending marking policy information to a user plane function network element, wherein the marking policy information indicates to add the duration to the PDU set.

24. The method according to any one of claims 21 to 23, wherein
a start moment of the duration is an end moment of a PDU set delay budget PSDB corresponding to a service to which the PDU set belongs; or
a start moment of the duration is a moment at which the access network device receives the PDU set, and the duration is greater than a PSDB corresponding to a service to which the PDU set belongs.

25. A communication apparatus, comprising:
a processor, configured to execute a computer program stored in a memory, to enable the apparatus to perform the method according to any one of claims 1 to 14, or perform the method according to any one of claims 15 to 20, or perform the method according to any one of claims 21 to 24.

26. The apparatus according to claim 25, wherein the apparatus further comprises the memory.

27. A computer-readable storage medium, wherein a computer program is stored on the computer-readable storage medium; and when the computer program is run on a computer, the computer is enabled to perform the method according to any one of claims 1 to 14, or perform the method according to any one of claims 15 to 20, or perform the method according to any one of claims 21 to 24.

28. A computer program product, wherein the computer program product comprises instructions used to perform the method according to any one of claims 1 to 14, or comprises instructions used to perform the method according to any one of claims 15 to 20, or comprises instructions used to perform the method according to any one of claims 21 to 24.

29. A communication system, comprising an access network device configured to perform the method according to any one of claims 1 to 14.

30. The communication system according to claim 29, wherein the communication system further comprises a user plane function network element configured to perform the method according to any one of claims 15 to 20.

31. A data transmission method in a communication system, wherein the method comprises:
receiving, by a first network element, a protocol data unit PDU set of a service used on a terminal, wherein the PDU set comprises a first PDU set and a second PDU set, and a service to which the first PDU set belongs is the same as a service to which the second PDU set belongs;
sending, by the first network element, the PDU set to a second network element;
sending, by the second network element, the first PDU set to the terminal within first duration; and
sending, by the second network element, the second PDU set to the terminal within second duration, wherein
the first duration is different from the second duration.
